(19) Europäisches Patentamt
European Patent Office
Office européen des brevets

(11) **EP 3 709 250 A1**

(12) **EUROPEAN PATENT APPLICATION**

(43) Date of publication:
**16.09.2020 Bulletin 2020/38**

(51) Int Cl.:
**G06Q 30/06** (2012.01)          **G06Q 50/06** (2012.01)
**G06Q 10/04** (2012.01)

(21) Application number: **19194669.8**

(22) Date of filing: **30.08.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.03.2019   JP 2019047467**

(71) Applicants:
 • **KABUSHIKI KAISHA TOSHIBA**
   **Minato-ku**
   **Tokyo (JP)**
 • **Toshiba Energy Systems & Solutions
   Corporation**
   **Saiwai-ku**
   **Kawasaki-shi**
   **Kanagawa (JP)**

(72) Inventors:
 • **SHIGA, Yoshiaki**
   **Tokyo (JP)**
 • **SHIN, Hiromasa**
   **Tokyo (JP)**
 • **KAKIMOTO, Mitsuru**
   **Tokyo (JP)**
 • **KIMURA, Kotaro**
   **Kanagawa (JP)**
 • **MARUYAMA, Honami**
   **Kanagawa (JP)**

(74) Representative: **Moreland, David**
   **Marks & Clerk LLP**
   **Aurora**
   **120 Bothwell Street**
   **Glasgow G2 7JS (GB)**

(54) **PREDICTION DEVICE, PREDICTION METHOD, AND COMPUTER PROGRAM**

(57)     According to one approach, a prediction device includes a similarity calculator and the predictor. The similarity calculator calculates a plurality of similarities between first weather prediction data at first times and second weather prediction data at a second time. The first weather prediction data of the first times indicates weather prediction at the first times for locations in a geographical area. The second weather prediction data indicates weather prediction at the second time for the locations. The predictor calculates a predicted value at the second time based on the plurality of similarities and actual values at the first times in the geographical area.

FIG. 1

**Description**

FIELD

The present disclosure relates to a prediction device, a prediction method and a computer program.

BACKGROUND

Buying and selling of electric power are typically performed via an electric power exchange. In the case of Japan, electric power is bought and sold via the Japan Electric Power eXchange (JEPX). In the JEPX, a day ahead market (spot market), an hour ahead market (intraday market) or the like are opened. In the sport market, electric power for being provided the next day is bought and sold. In the hour ahead market (intraday market), trading can be performed for adjustment up to one hour before actual demand and supply.

It is extremely important in electric power trading to accurately predict market price of electric power to be traded in the electric power exchange. In recent years, a large volume of renewable energy power supplies have been introduced, and solar power generation or the like influences a higher impact on spot market price. Because an amount of power generation of the solar power generation is affected by conditions of the weather, it is also important to take into account the conditions of the weather to predict electric power market price with high accuracy.

Approaches provide a prediction device, a prediction method and a computer program which can calculate a predicted value of a prediction target with high accuracy.

BRIEF DESCRIPTION OF THE DRAWINGS

FIG. 1 is a diagram illustrating an overall configuration example of a prediction system according to a first approach.
FIG. 2 is a diagram illustrating an example of an area and a plurality of locations.
FIG. 3 is an explanatory diagram of a blind single-price auction system.
FIG. 4 is a diagram illustrating an example of weather prediction data.
FIG. 5 is a diagram illustrating an example of actual data.
FIG. 6 is a diagram illustrating an example of holiday event information.
FIG. 7 is a diagram illustrating an example of sample data.
FIG. 8 is a diagram illustrating an example of metric conditions.
FIG. 9 is a diagram illustrating an example of metric weight conditions.
FIG. 10 is a diagram illustrating an example of a predicted value of electric power market price.
FIG. 11 is a diagram illustrating an example of probability distribution estimated through kernel density estimation.
FIG. 12 is a diagram illustrating an example of predicted transition data of the electric power market price.
FIG. 13 is a diagram illustrating another example of the prediction device according to the first approach.
FIG. 14 is a flowchart illustrating an example of operation of the prediction device in FIG. 13.
FIG. 15 is a diagram illustrating an overall configuration example of a prediction system according to a second approach.
FIG. 16 is a diagram illustrating an overall configuration example of a prediction system according to a third approach.
FIG. 17 is a diagram illustrating an example of weather prediction actual data.
FIG. 18 is a flowchart illustrating an example of operation of the prediction device in FIG. 16.
FIG. 19 is a diagram illustrating an example of actual data.
FIG. 20 is a diagram illustrating a hardware configuration of the prediction device according to the first to the third approaches.

DETAILED DESCRIPTION

According to one approach, a prediction device includes a similarity calculator and the predictor. The similarity calculator calculates a plurality of similarities between first weather prediction data at first times and second weather prediction data at a second time. The first weather prediction data of the first times indicates weather prediction at the first times for locations in a geographical area. The second weather prediction data indicates weather prediction at the second time for the locations. The predictor calculates a predicted value at the second time based on the plurality of similarities and actual values at the first times in the geographical area.

Approaches will be described below with reference to the drawings. While, in the following description, a case will be described as an example where electric power market price is predicted, a prediction target is not particularly limited thereto. For example, water demand, gas demand, sales price of a product, the number of customers coming to a store or facility, the number of passengers of transportation, the number of accesses to a web site, the number of users of service, the number of patients of medical institution, or the like, may be set as the prediction target.

(First Approach)

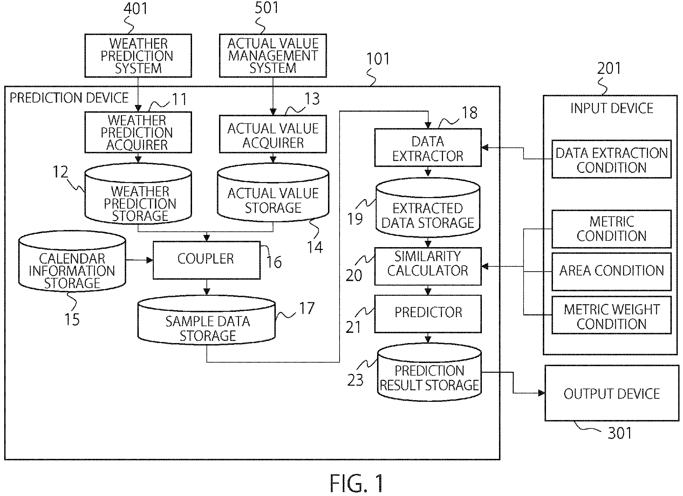

FIG. 1 illustrates an overall configuration example of a prediction system according to a first approach. The prediction system in FIG. 1 includes a prediction device 101, an input device 201, an output device 301, a weather prediction system 401, and an actual value management system 501. The prediction device 101 is connected to the weather prediction system 401 and the actual value management system 501 via a first communication network. The prediction device 101 is connected to the input device 201 and the output device 301 via a second communication network or a communication cable. The first communication network or the second communication network is a wired network, a wireless network or a hybrid of these networks. The first communication network or the second communication network is a local area network or a wide area network as an example. The communication cable is an arbitrary cable such as a USB cable and a serial cable.

The input device 201 accepts various kinds of instructions or operation relating to data input from a user of the present device. The user is an operator, a manager, or the like, of the present device. The input device 201 accepts operation relating to processing of the prediction device 101, operation relating to visualization of a prediction result of the prediction device 101, or the like, from the user. The input device 201 is realized with, for example, a mouse, a keyboard, a touch panel, a track ball, a joystick, a pen tablet, a speech recognition device, an image recognition device or combination of them. The input device 201 may be an information terminal such as a personal computer, a tablet, a smartphone and a mobile phone. While only one input device 201 is illustrated in FIG. 1, there may be a plurality of input devices 201.

The output device 301 is a device which outputs input data. The output device 301 is a display device which can display data as an example. In this case, the output device 301 may be, for example, a liquid crystal display, an organic electroluminescence display, an LED (Light Emitting Diode) display, a CRT (Cathode Ray Tube) display, a projector, or other types of displays. The output device 301 may be a printer which prints data on a sheet, or may be a transmission device which transmits data in a wireless or wired manner. In the following description, a case will be described where the output device 301 is a display device.

The input device 201 and the output device 301 may be integrally configured with a personal computer, a tablet, a smartphone, or the like. Further, one or both of the input device 201 and the output device 301 may be integrally configured with the prediction device 101.

The weather prediction system 401 predicts weather information (meteorological value) at a plurality of locations in an electric power supply area of a certain electric power company. The weather prediction system 401 is an external system of the prediction device 101.

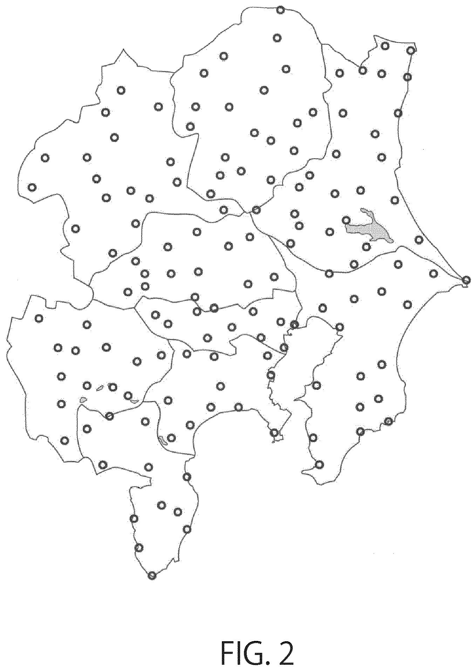

FIG. 2 illustrates an example of a plurality of locations in an electric power supply area of a certain electric power company. The locations are indicated with small circles. The locations are locations where Meteorological Agency observation stations (AMeDAS: Automated Meteorological Data Acquisition System) are provided as an example.

The weather prediction system 401 predicts a meteorological value based on observation values of the meteorological values at observation stations at the respective locations. The weather prediction system 401 may use a weather satellite to observe the meteorological values. The weather prediction system 401 stores values of the predicted meteorological values (weather predicted values) in an internal database (DB) in association with location IDs and time information (date and time). Prediction of the meteorological values is performed at a fixed time interval or at an interval designated in advance as an example. The weather prediction system 401 provides weather prediction data including the weather predicted values, the location IDs and the time information stored in the DB to the prediction device 101 in response to a request from the prediction device 101. The weather predicted value has a numerical form as an example. The weather prediction system 401 is, for example, a weather information server, web service or cloud service provided by domestic and international government institutions such as the Meteorological Agency, private entities or international institutions.

The actual value management system 501 stores actual data of the prediction target. The actual value management system 501 is an external system of the prediction device 101. In the actual data, an actual value is associated with time information. The actual value is a past value. Examples of the actual value can include, for example, market price of electric power (electric power market price) traded at the electric power exchange, a bid amount, an electric power demand, an amount of power generation of renewable energy power supplies, or the like. Further, sales price of a product, the number of sales, shipment, output, or the like, may be set as the actual value. In the following description, it is assumed that the actual value is electric power market price.

Here, the electric power market price will be described using an example of the Japan Electric Power Exchange (JEPX). In a spot (day ahead) market opened at the JEPX, one day is divided into 48 time frames (product units) in measurement unit of electric power (that is, from 0 minute to 30 minutes, and from 30 minutes to 60 minutes for each hour), and electric power is traded for each time frame. A unit of an electric power amount to be traded is 1 MW (30 minutes), and this can be expressed as 500 kWh in an electric power amount. Bid price can be designated in unit of 0.01 yen per kWh. In the spot market, bids for time frames of the next day are closed at 10 o'clock every day.

The respective time frames of the spot market are independent of each other, and contract price and a contract amount are determined for each time frame in a blind single-price auction system.

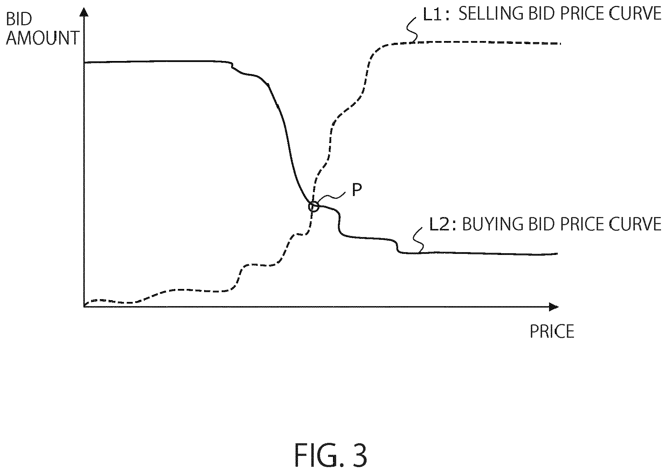

FIG. 3 is an explanatory diagram of the blind single-price auction system. Each participant who bids for a time frame bids in a (blind) state where bids by other participants are not disclosed. After bids are closed, a selling bid price curve L1 obtained by accumulating bid amounts from low price of a selling bid and a buying bid price curve L2 obtained by accumulating bid amounts from high price of a selling bid are calculated, and an intersection point P of them is calculated. The intersection point P becomes contract price and a contract amount of this time frame. Only a seller who bids at price lower than this contract price can sell a product (electric power) at the contract price, and only a buyer who bids at price higher than the contract price can buy a product (electric power) at the contract price.

Note that, depending on a result of contract in the spot market, a case occurs where an electric power amount exceeds a limit of an electric power amount (interconnection line limit) which can be made to flow in an interconnection line of an electric power system. For example, an intersection point of a buying (demand) curve obtained by synthesizing bids all over Japan and a selling (supply) curve obtained by synthesizing bids all over Japan is obtained, and buying and selling are concluded at price and an amount at the intersection point. In this case, because an electric power amount which can be transmitted is small depending on the interconnection line between areas, there is a case where the electric power amount exceeds an upper limit of the interconnection line. In a time frame in which the electric power amount exceeds the upper limit in this manner, the area is segmented at a portion of the interconnection line. Then, an intersection point of the demand curve and the supply curve is independently obtained in the respective segmented areas, and contract price and a contract amount are determined. Such a state will be referred to as market segmentation. At this time, price contracted all over Japan will be referred to as system price, and price contracted in each area will be referred to as area price.

The electric power market price managed in the actual value management system 501 may be either the system price or the area price. The actual value management system 501 manages actual data of electric power market price in unit of area in which the electric power market price is determined. The actual value management system 501 may acquire the actual data of the electric power market price from an electric power exchange system or other systems coordinating with the electric power exchange system. The actual value management system 501 may be part of the electric power exchange system.

The prediction device 101 includes a weather prediction acquirer 11, a weather prediction storage 12, an actual value acquirer 13, an actual value storage 14, a calendar information storage 15, a coupler 16, a sample data storage 17, a data extractor 18, an extracted data storage 19, a similarity calculator 20, a predictor 21 and a prediction result storage 23.

The weather prediction acquirer 11 transmits an acquisition request for weather prediction data to the weather prediction system 401, and acquires weather prediction data including a location ID of each location, weather predicted values and time information (date and time) from the weather prediction system 401. The weather prediction acquirer 11 stores the acquired weather prediction data in the weather prediction storage 12. The weather prediction acquirer 11 may transmit an acquisition request for the weather prediction data for each fixed period and acquire weather prediction data which has not been acquired yet as an example. Alternatively, the weather prediction acquirer 11 may designate an acquisition target period and acquire the weather prediction data belonging to the designated period from the weather prediction system 401. Alternatively, the weather prediction acquirer 11 may acquire the weather prediction data through push notification from the weather prediction system 401. It is also possible to acquire the weather prediction data from the weather prediction system 401 using methods other than the methods described here.

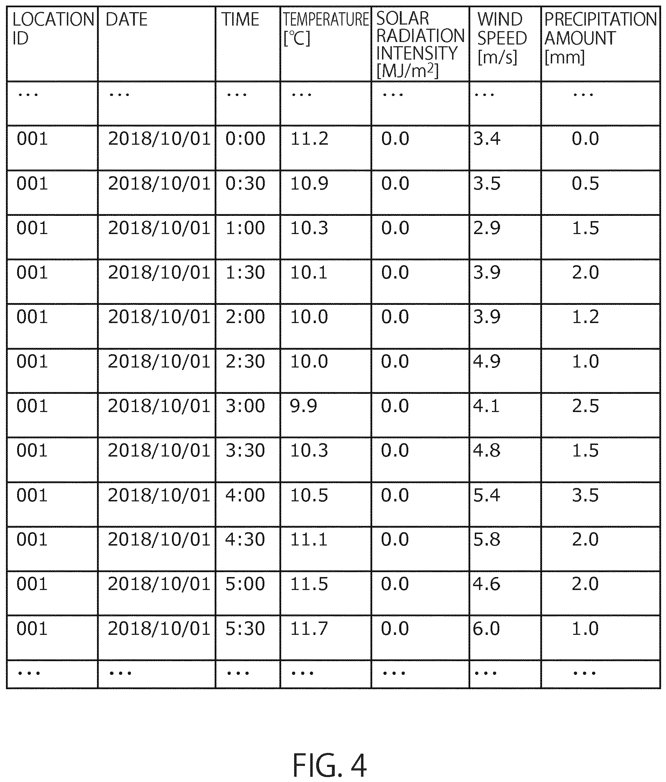

FIG. 4 illustrates an example of the weather prediction data stored in the weather prediction storage 12. The weather prediction data is stored in a table form. The location IDs, dates, time and the weather predicted values are stored. While, in this example, weather predicted values for the location whose location ID is 001 and for time from 0:00 to 5:30 on October 1, 2018 are indicated, actually, the weather predicted values of other time and other locations are also stored. While a time interval of the weather predicted values is 30 minutes, the time interval may be other time intervals such as 10 minutes and one hour. While, in this example, the predicted meteorological value is a temperature, solar irradiance, wind speed and a precipitation amount, the predicted meteorological value is not limited to those described here. For example, there may be items such as a direction of wind and sunshine duration. Further, meteorological values may be different for each observation station.

The actual value acquirer 13 transmits an acquisition request for actual data to the actual value management system 501 and acquires actual data from the actual value management system 501. The acquisition request may include information designating an area for an acquisition target. In this case, the actual value management system 501 provides actual data in the designated area. The actual value acquirer 13 stores the acquired actual data in the actual value storage 14. The actual value acquirer 13 may transmit an acquisition request for actual data for each fixed period and acquire actual data which has not been acquired yet as an example. Alternatively, the actual value acquirer 13 may designate an acquisition target period and acquire actual data belonging to the designated period from the actual value management system 501. Alternatively, the actual value acquirer 13 may acquire the actual data through push notification from the actual value management system 501. It is also possible to acquire the actual data from the actual value management system 501 using methods other than the methods described here.

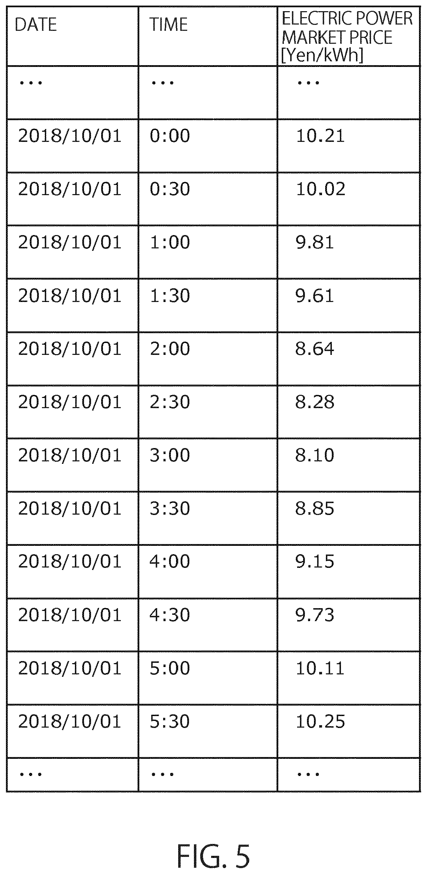

FIG. 5 illustrates an example of the actual data stored in the actual value storage 14. The actual data is stored in a table form. The actual data in FIG. 5 which is a table includes a date, time and an actual value of electric power market price. In this example, the actual value of the electric power market price is electric power market price determined for an area indicated in the map in FIG. 2. While the electric power market price is expressed in unit of 0.01 yen per kWh, the unit is not limited to this.

The calendar information storage 15 stores calendar information as attribute information of each year-month-date. Examples of the calendar information can include category information for distinguishing whether each date is a weekday or a holiday. Further, examples of the calendar information can include day information indicating a day of each date. Still further, examples of the calendar information can include holiday event information indicating name of a holiday. It is also possible to use other types of calendar information.

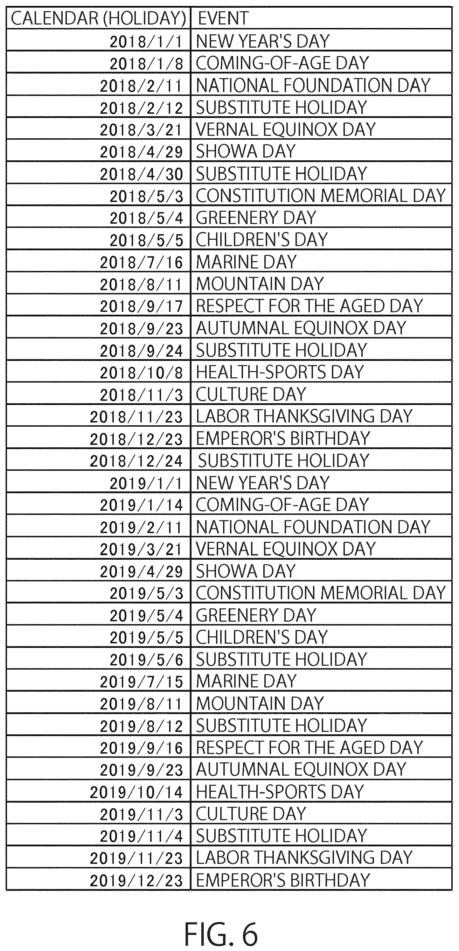

FIG. 6 illustrates an example of a table in which holiday event information is stored as an example of the calendar information. Name of each holiday in 2018 and 2019 is stored as event information.

Other examples of the calendar information can include category information of a time slot such as daytime, midnight and a commuting time slot. Further, the calendar information may be information of season (summer, winter). Still further, the calendar information may be event information such as a big sports event and a festival.

The coupler 16 acquires data stored in the weather prediction storage 12 and the actual value storage 14 and couples the acquired data. Coupling of the data is performed using time as a key. Further, the coupler 16 acquires the calendar information from the calendar information storage 15 and couples the calendar information of the corresponding date to the coupled data. However, because an actual value does not exist yet for a date and time in the future (including a date and time of a prediction target), the weather prediction data is coupled only to the calendar information. The coupled data will be referred to as "sample data". The coupler 16 stores the acquired sample data in the sample data storage 17.

The sample data storage 17 stores the sample data acquired by the coupler 16 therein.

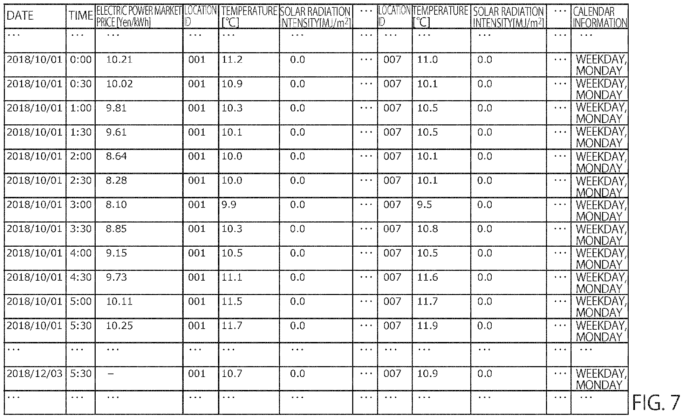

FIG. 7 illustrates an example of the sample data stored in the sample data storage 17. The sample data is stored in a table form. Each row of the table in FIG. 7 corresponds to the sample data.

For example, sample data at 0:00 on October 1, 2018 includes electric power market price of 10.21 yen of a frame from 0:00 to 0:30, each location ID in a target area, a temperature, solar irradiance, or the like, and category information (weekday in this example) and day information (Monday in this example) as the calendar information corresponding to the date.

Because sample data after 0:00 on December 3, 2018 is sample data in dates in the future, while weather predicted values (such as a temperature and solar irradiance) at each location and the calendar information are stored, the electric power market price is not stored.

The data extractor 18 acquires information indicating at least one data extraction conditions from the input device 201. The data extraction conditions are input by the user. It is also possible to provide a storage for the information indicating the data extraction conditions in the prediction device 101, and acquire the information indicating the data extraction conditions from the storage.

The data extraction conditions are extraction conditions for sample data to be used for prediction. The data extraction conditions designate a date and time (for example, from 0:00 to 0:30 on December 3, 2018) of the prediction target and a period during which data is extracted (comparison period). Here, while it is assumed that time indicates 30 minutes corresponding to a length of a time frame, the time is not limited to this. Further, only a date may be designated instead of a date and time being designated. In this case, considered that it may be considered that 48 time frames are designated in a day in a similar manner to a case where a date and time are designated.

The period during which the data is extracted is an arbitrary past period before the date and time of the prediction target. For example, the period is past 30 days immediately before the date and time of the prediction target (or the date of the prediction target). In this case, in the case where the date and time of the prediction target is set at "t", a period from (t - 30 days) to (t - 1 day) corresponds to the comparison period. Alternatively, it is also possible to set the date of the prediction target as "d", and in this case, a period from (d - 30 days) to (d - 1 day) may be set as the comparison period.

As another example, there is designation of a weekday or a holiday. For example, in the case where sample data of only weekdays is used, a weekday is designated as the data extraction conditions. In this case, it is possible to extract a period including only weekdays.

As still another example, there is designation of a day (e.g., Sunday, Monday, Tuesday....). For example, there is a case where a day which is the same as the day of the prediction target is designated. In this case, it is possible to extract a period including only the day.

The above-described data extraction conditions may be combined or other data extraction conditions may be defined.

A period during which the data extraction conditions are satisfied will be referred to as a "comparison period".

The data extractor 18 extracts sample data at evaluation time of the prediction target (date and time t of the prediction target, which corresponds tosecond time) and sample data at evaluation time (which corresponds to first time) of each date included in the comparison period from the sample data storage 17 based on the data extraction conditions. The evaluation time is the same between the date and time t of the prediction target and each date included in the comparison period. The data extractor 18 stores the extracted sample data in the extracted data storage 19.

Data at the evaluation time of the prediction target (date and time t of the prediction target) will be referred to as "target sample data", and data at the evaluation time on each date belonging to the comparison period will be referred to as "comparison sample data".

The extracted data storage 19 stores the data (target sample data, comparison sample data) extracted by the data extractor 18.

The similarity calculator 20 receives at least one metric condition which designates a similarity metric, at least one metric weight condition which designate a weight of a similarity metric, and at least one area condition which designate a target area from the input device 201. The similarity calculator 20 calculates, based on these conditions, a similarity between the target sample data at the evaluation time of the prediction target (date and time t of the prediction target) and the comparison sample data at the evaluation time of each date belonging to the comparison period at the extracted data storage 19.

The similarity metric designated by the metric conditions is a metric for calculating a similarity. For example, as the similarity metric regarding the meteorological value, there are a predicted value of a temperature, a predicted value of solar irradiance, or the like. There may be one similarity metric or a plurality of similarity metrics. Further, as the similarity metric regarding time, there is a time difference between the evaluation time of the prediction target (date and time t of the prediction target) and the evaluation time on each date (the detail of which will be described later).

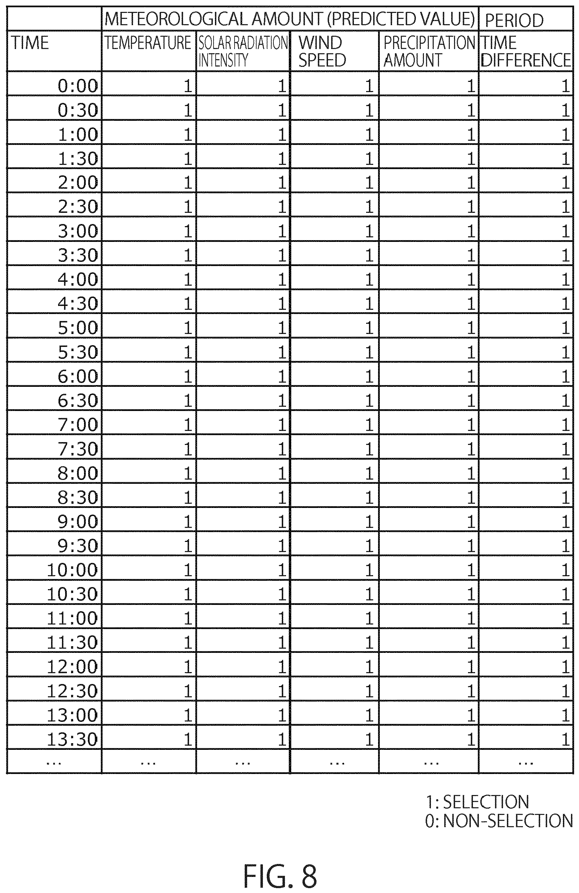

FIG. 8 illustrates an example of data of the metric conditions. The data of the metric conditions is stored in a table form. As the similarity metric, a temperature, solar irradiance, wind speed, a precipitation amount, and a time difference are indicated. Selection or non-selection of each similarity metric is designated for each time (for each time frame of 30 minutes). "1" indicates that the corresponding similarity metric is used, and "0" indicates that the corresponding similarity metric is not used. In the example in FIG. 8, all the similarity metrics are selected in all the time frames. Here, whether or not to use each similarity metric is specified with "1" or "0" here; however, only a similarity metric to be used may be designated as metric conditions for each time frame.

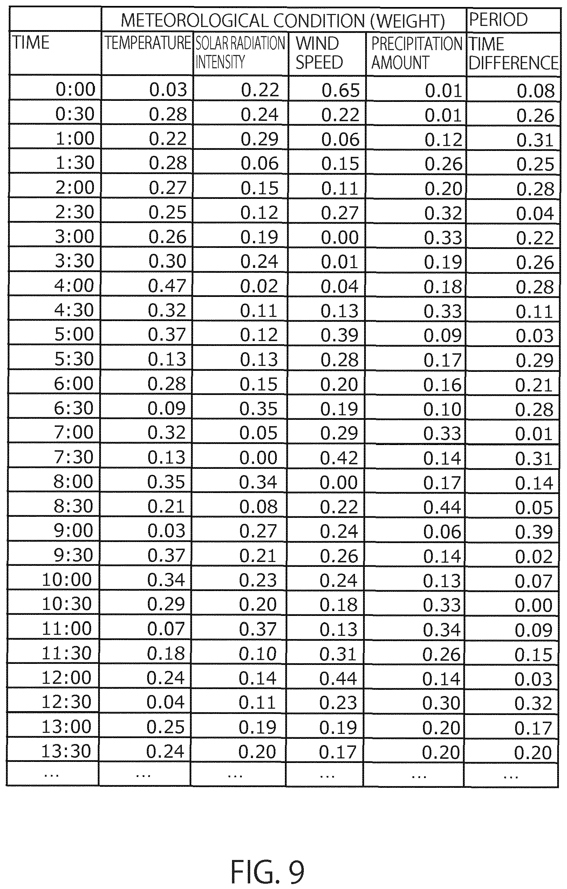

FIG. 9 illustrates an example of data of the metric weight conditions. The data of the metric weight conditions is stored in a table form. The metric weight conditions designate a weight (first weight) of each similarity metric. A weight is designated for each time (for each time frame of 30 minutes) for each similarity metric illustrated in FIG. 8. The weight can be arbitrarily determined by the user. As an example, a weight regarding at least one weather conditions corresponds to the first weight, and a weight regarding the time difference corresponds to the second weight.

The area conditions designate a target area. The target area is an area in which prediction is performed, and is, as an example, an electric power supply area of one electric power company. The target area may be designated by a prefecture, address or combination thereof or may be designated using other means. As a modified example, the area conditions may be information which designates a plurality of location IDs. As an example, the target area is the area illustrated in FIG. 2. In the present approach, this case will be assumed.

Information of a prefecture, a district, address, or the like, to which a location indicated by each location ID belongs is included as part of the actual data in the actual value storage 14. Alternatively, it is also possible to separately provide a storage in which the information is stored at the prediction device 101.

The similarity calculator 20 specifies at least one locations belonging to the target area designated by the area conditions. The similarity calculator 20 calculates a mean value (M) and standard deviation (S) of each similarity metric using the comparison sample data at the evaluation time on each date belonging to the comparison period for each of the specified locations. For example, in the case where there are A locations and B similarity metrics (A and B are numerals than or equal to 1), a mean value and standard deviation of each of the B similarity metrics are calculated for each of the A locations. Calculation expressions of the mean value and the standard deviation will be indicated below.
[Math. 1]

$$M = \frac{1}{n} \sum_i^n D \quad (1)$$

[Math. 2]

$$S = \sqrt{\frac{1}{n}\sum_{i}^{n}(D - M)^2} \quad (2)$$

D indicates a predicted value of each similarity metric (here, a similarity metric of a meteorological value). n corresponds to the number of pieces of data of each similarity metric, that is, the number of days included in the comparison period. For example, in the case where the number of days belonging to the comparison period is 30 (in the case where data corresponding to past 30 days is used), n is 30.

The similarity calculator 20 standardizes (normalizes) the predicted value of each similarity metric at the evaluation time on each date belonging to the comparison period using the mean value M and the standard deviation S of each similarity metric. The standardized predicted value will be referred to as a "comparison standardized predicted value" (or "past standardized predicted value"). An expression for standardization will be indicated below. d is the standardized predicted value. By this means, the predicted value of each similarity metric at the evaluation time on each past date belonging to the comparison period is converted into a value in accordance with distribution in which a mean value is 0 and dispersion is 1.

[Math. 3]

$$d = \frac{D - M}{S} \quad (3)$$

In a similar manner, the predicted value of each similarity metric of the target sample data on the date and time t of the prediction target at each location is also standardized using expression (3). That is, the predicated value is set as D in expression (3), and the above-described calculated values are used as the mean value M and the standard deviation S. The standardized predicted value will be referred to as a "target standardized predicted value". By this means, a standardized predicted value of each similarity metric at the evaluation time on the date of the prediction target (date and time t of the prediction target) can be obtained for each location.

The similarity calculator 20 calculates a Euclidean distance ($V^{weather}$) regarding a meteorological value for the evaluation time on the date of the prediction target (date and time t of the prediction target) for each date belonging to the comparison period. In the calculation, the comparison standardized predicted value of each similarity metric (only a similarity metric selected by the metric conditions) at the evaluation time on the date belonging to the comparison period at each location, and the target standardized predicted value of each similarity metric on the date and time t of the prediction target are used. Hereinafter, the Euclidean distance ($V^{weather}$) may be referred to as a "weather factor score". A calculation expression of the Euclidean distance ($V^{weather}$) will be indicated below.

[Math. 4]

$$V^{weather} = \sum_{c}\sum_{l} w_{c,l}(f_{c,l} - d_{c,l})^2 \quad (4)$$

Here, "c" is a similarity metric regarding a meteorological value, and a similarity metric selected by the metric conditions. In a case of FIG. 8, the metric conditions are a temperature, solar irradiance, wind speed and a precipitation amount. "l" is a location belonging to the target area. "w" is a weight of each similarity metric (designated by the above-mentioned metric weight conditions. See FIG. 9). As the weight is greater, greater importance is placed on the similarity metric. To use a common weight at the respective locations, it is only necessary to substitute "$w_c$" for "$w_{c,l}$" in expression (4). A case will be assumed in the present approach where weights are the same at all the locations for each similarity metric.

In expression (4), a difference between the target standardized predicted value $f_{c,l}$ of the similarity metric c on the date and time t of the prediction target and the comparison standardized value $d_{c,l}$ of the similarity metric c at the evaluation time on a date in the comparison period is raised to the second power for each location l belonging to the target area, and is multiplied by a weight $w_{c,l}$. Then, multiplication results are added up among similarity metrics. The total values are summed among locations. By this means, the weather factor score $V^{weather}$ is obtained for the date in the comparison period. Weather factor scores $V^{weather}$ for other dates belonging to the comparison period are also calculated in a similar manner. By this means, the weather factor score $V^{weather}$ is obtained for evaluation time for each date of the comparison period.

Further, in the case where a time difference for the evaluation time is selected (see FIG. 8) by the metric conditions, the similarity calculator 20 calculates a Euclidean distance ($V^{calendar}$) regarding time for the date and time t of the prediction target for each date belonging to the comparison period. A calculation expression of the Euclidean distance ($V^{calendar}$) will be indicated below. There is a case where the Euclidean distance ($V^{calendar}$) is referred to as a "time difference score".

[Math. 5]

$$V^{calendar} = \Delta t = w_{td}(t - t_a) \quad (5)$$

t indicates the date and time t of the prediction target. $t_a$ indicates the evaluation time on each date belonging to the comparison period. $w_{td}$ indicates a time difference weight (see FIG. 9) for the evaluation time. In expression (5), a time difference score is calculated by multiplying a difference between t and $t_a$ by the time difference weight $w_{td}$. As the evaluation time on each date belonging to the comparison period is closer to the date and time of the prediction target, the time difference score becomes smaller. Note that, in the case where a time difference for the evaluation time is not selected by the metric conditions, calculation of the time difference score may be omitted.

Similarity ($SCORE_i$) on the date and time of the prediction target is calculated for the evaluation time on each date belonging to the comparison period based on the weather factor score ($V^{weather}$) calculated for the evaluation time on each date belonging to the comparison period and the time difference score ($V^{calendar}$) calculated for the evaluation time on each date belonging to the comparison period. A calculation expression of the similarity will be indicated below.

[Math. 6]

$$SCORE_i = \frac{1}{W_{weather}\frac{V_i^{weather}}{\sum_i^n V_i^{weather}} + W_{calendar}\frac{V_i^{calendar}}{\sum_i^n V_i^{calendar}}} \quad (6)$$

$V_i^{weather}/\sum V_i^{weather}$ which is the first term of the denominator is obtained by dividing the weather factor score at the evaluation time on each date by a sum of these weather factor scores. By this means, the weather factor score at the evaluation time on each date is standardized.

$V_i^{calendar}/\sum V_i^{calendar}$ which is the second term of the denominator is obtained by dividing the time difference score at the evaluation time on each date by a sum of these time difference scores. By this means, the time difference score at the evaluation time on each date is standardized.

$W_{weather}$ is a weight for the weather factor score, and $W_{calendar}$ is a weight for the time difference score. The user can perform control as to which of the weather factor score and the time difference score importance is placed on using these weights. That is, in the case where greater importance is placed on the weather factor score than the time difference score, $W_{weather}$ is made greater than $w_{calendar}$, in the case where greater importance is placed on the time difference score than the weather factor score, $W_{calendar}$ is made greater than $W_{weather}$, and, in the case where the scores are equally taken into account, $W_{weather}$ is made the same value as $W_{calendar}$. $W_{weather}$ and $W_{calendar}$ may be designated from the input device 201 or may be values determined in advance.

In this manner, in expression (6), the similarity ($SCORE_i$) is calculated by standardizing the weather factor score and the time difference score, adding up the scores weighted by the weather factor weight and the time difference weight and calculating an inverse of the result. The inverse is calculated such that a value of the similarity becomes higher as the similarity is higher. This is because smaller values of the weather factor score and the time difference score indicate higher similarity.

The predictor 21 selects top H (H is an integer of 2 or greater) similarities among the similarities ($SCORE_i$) calculated for the evaluation time on each date of the comparison period. H may be designated by the user from the input device 201 or may be a previously determined value or a value which is randomly determined.

The predictor 21 calculates a predicted value of electric power market price on the date and time of the prediction target based on the selected H similarities ($SCORE_i$), actual values ($A_i$) at the evaluation time on the dates on which the similarities are selected (hereinafter, similarity dates). That is, the actual values ($A_i$) are actual values of the sample data for which the selected similarities are calculated. A calculation expression of the predicted value will be indicated below. Y indicates the predicted value.

[Math. 7]

$$Y = \sum_i^H W_{score\_i} A_i \quad (7)$$

$$W_{score\_i} = \frac{SCORE_i}{\sum_i^H SCORE_i} \quad (8)$$

$A_i$ indicates an actual value (electric power market price) of the evaluation time on the similarity date.

$W_{score\_i}$ is a value obtained by dividing the selected H similarities by a sum of these similarities. $W_{score\_i}$ indicates a weight for the actual value $A_i$. Each $SCORE_i$ is standardized so that a sum of $W_{score\_i}$ becomes 1. $W_{score\_i}$ will be referred to as a similarity weight.

In this manner, in expression (7), the predicted value (Y) is calculated by adding up the actual values $A_i$ of the evaluation time on the respective similarity dates (that is, actual values of the respective pieces of similarity sample data) by weighting with the respective similarity weights $W_{score\_i}$. That is, the predicted value (Y) is calculated by weighting the actual values $A_i$ (that is, actual values of the respective pieces of similarity sample data) of the evaluation time on the respective similarity dates with the respective $SCORE_i$ and averaging resultant values

The predictor 21 stores the predicted value of the electric power market price calculated for the date and time of the prediction target in the prediction result storage 23.

The prediction device 101 can obtain predicted values corresponding to 48 times (48 time frames) on the date of the prediction target by repeating processing of the data extractor 18, the similarity calculator 20 and the predictor 21 while shifting time (time frame) of the prediction target by unit time (for example, by one time frame).

Also, the prediction device 101 can obtain predicted values corresponding to 48 time frames for a plurality of dates by repeating similar processing while shifting the date of the prediction target by one day. Note that, in the case where there exists a date on which the actual value has not been obtained yet in a period designated by the data extraction conditions, a period may be specified so that the date is not included. For example, in the case where electric power market price of two days later is predicted, because the actual value of the electric power market price of tomorrow does not exist, a period is set so that a date of tomorrow is not included in the data extraction conditions. Alternatively, in the case where a period designated by the data extraction conditions includes a date on which the actual value does not exist, it is also possible to cause the data extractor 18 to operate so as to automatically omit acquisition of the actual value on that date.

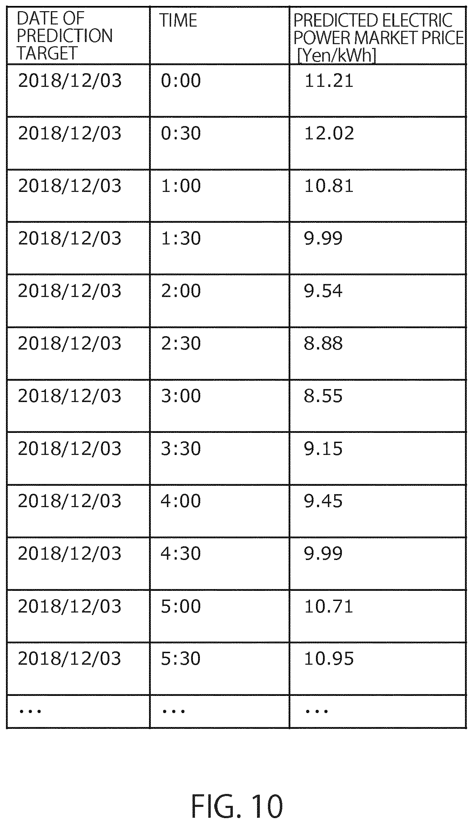

FIG. 10 is a table indicating an example of the predicted values of the electric power market price calculated for 48 times (time frames) obtained by performing prediction in unit of 30 minutes in the case where the date of the prediction target is December 3, 2018.

The predictor 21 may calculate statistical information for the predicted values. As an example, the predictor 21 may estimate probability distribution of the predicted values. In this case, the predictor 21 may store the estimated probability distribution in the prediction result storage 23.

As a method for generating the probability distribution, an estimation method such as kernel density estimation can be used. In this example, the probability distribution can be generated by regarding the similarity weight $W_{score}$ as frequency of the actual value A and by setting the actual value A of the electric power market price as a probability variable. The generated probability distribution is used as probability distribution of the predicted values of the electric power market price.

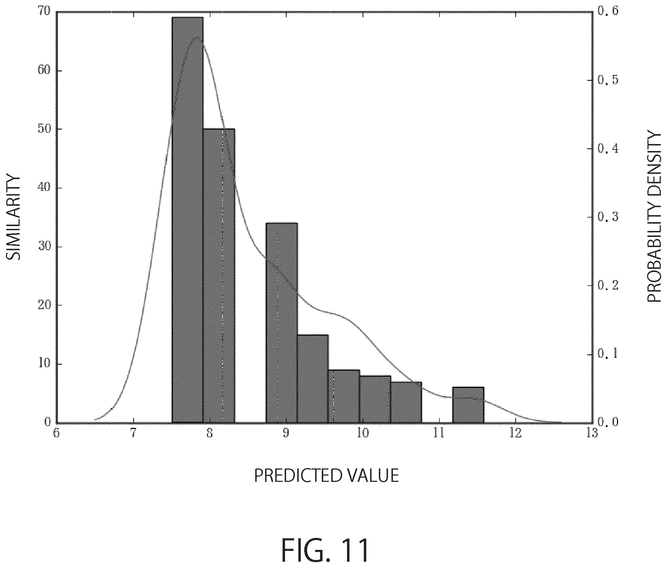

FIG. 11 illustrates an example of the probability distribution estimated through the kernel density estimation. A horizontal axis indicates electric power market price, and a vertical axis on the right side indicates probability density. As reference information, similarity is indicated on a vertical axis on the left side, and histogram in which a value of the similarity is regarded as frequency of the actual value is also indicated. It is also possible to estimate the probability distribution from this histogram.

The predictor 21 may specify a 0.00 quartile point (minimum value), a 0.25 quartile point, a 0.75 quartile point and a 1.00 quartile point (maximum value) based on the probability distribution. Each quartile point indicates a reliability segment of the probability distribution. The predictor 21 may calculate the predicted value and the probability distribution for each time (for each time frame) and may generate a graph indicating temporal transition of the predicted value and a graph indicating temporal transition of each quartile point of the probability distribution as the predicted transition data of the electric power market price. The predictor 21 may store the generated predicted transition data in the prediction result storage 23.

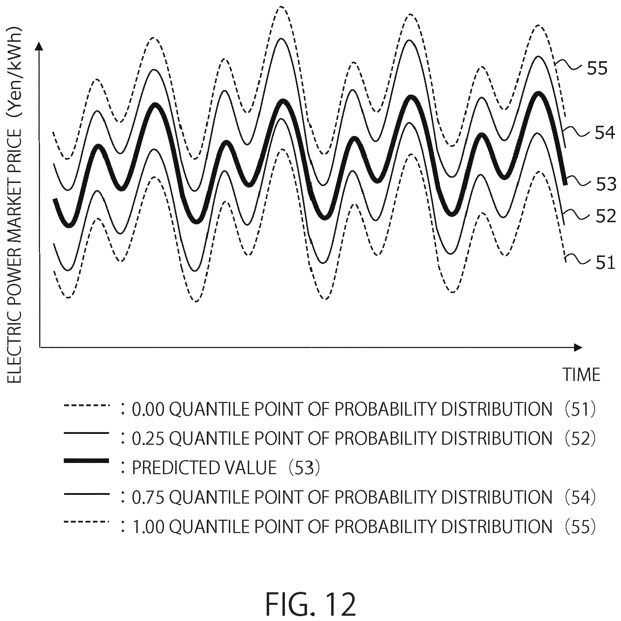

FIG. 12 illustrates an example of the predicted transition data of the electric power market price generated by the predictor 21. A horizontal axis indicates time, and a vertical axis indicates electric power market price. A graph 51 which indicates temporal transition of the 0.00 quartile point of the probability distribution, a graph 52 which indicates temporal transition of the 0.25 quartile point of the probability distribution, a graph 53 which indicates temporal transition of the predicted values calculated by the predictor 21, a graph 54 which indicates temporal transition of the 0.75 quartile point of the probability distribution, and a graph 55 which indicates temporal transition of the 1.00 quartile point of the probability distribution are indicated. In this manner, it is possible to present the probability distribution and the reliability segment to the user as well as a single predicted value.

The output device 301 reads out the data stored in the prediction result storage 23 and displays the data on a screen. For example, a table of the predicted values of the electric power market price (see FIG. 10), the probability distribution estimated through kernel density estimation (see FIG. 11) or the predicted transition data of the electric power market price (see FIG. 12) are displayed.

In the above-described approach, it is also possible to calculate the predicted value with higher accuracy by correcting the predicted value (Y) calculated by the predictor 21 using a correction model (hereinafter, a model).

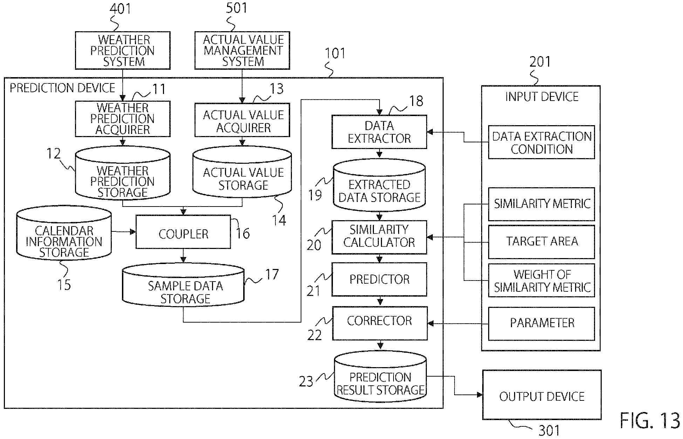

FIG. 13 illustrates a configuration example of the prediction device in this case. A corrector 22 which corrects the predicted value based on the model is provided. The corrector 22 acquires a parameter of the model from the input device 201. Among the predicted value calculated by the predictor 21 and the actual value at the evaluation time on each date of the comparison period, the corrector 22 sets at least the former as input of the model based on the acquired parameter of the model, and outputs the corrected predicted value. The corrector 22 stores the corrected predicted value in the prediction result storage 23.

While examples of the model can include a regression model, a Kalman filter, and a neural network, any model may be used. As an example, the corrector 22 may generate the model based on the actual value at the evaluation time on each past date and the predicted value (a value which has been calculated in the past is stored) at the evaluation time on each date belonging to the comparison period. The corrector 22 generates the model for correcting the predicted value so that a difference between the actual value at the evaluation time on each past date and the predicted value at the evaluation time on each date belonging to the comparison period becomes smaller. For example, the corrector 22 generates a model which regresses to the actual value with the predicted value. In this case, the parameter of the model is determined so as to minimize a target function provided in advance (a function which defines a difference between the predicted value and the actual value). The predicted value is input to the model, and the corrected predicted value is output from the model. The parameter of the generated model may be stored in a parameter storage (not illustrated).

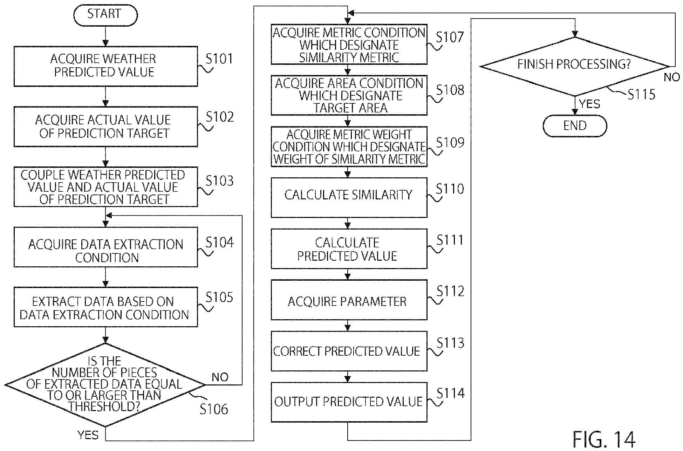

FIG. 14 is a flowchart illustrating an example of operation of the prediction device in FIG. 13. The weather prediction acquirer 11 acquires a weather predicted value from the weather prediction system 401 and stores the weather predicted value in the weather prediction storage 12 (S101). Past weather predicted values and future weather predicted values are stored in the weather prediction storage 12 in chronological order.

The actual value acquirer 13 acquires the actual value of the prediction target (for example, the electric power market price) from the actual value management system 501, and stores the acquired actual value in the actual value storage 14 (S102). Past actual values are stored in the actual value storage 14 in chronological order.

The coupler 16 acquires the data stored in the weather prediction storage 12 and the actual value storage 14 and couples the acquired data using time as a key (S103). Further, the coupler 16 acquires calendar information from the calendar information storage 15 and couples the calendar information on the corresponding date to the coupled data (S103). However, because an actual value does not exist yet for future time, it is only necessary to couple the calendar information only to the weather prediction data. The coupler 16 stores the data coupled in this manner in the sample data storage 17 as sample data (S103).

The data extractor 18 acquires information indicating the data extraction conditions from the input device 201 (S104).

The data extractor 18 extracts data from a plurality of pieces of sample data stored in the sample data storage 17 based on the data extraction conditions (S105). Specifically, the data extractor 18 extracts data at the evaluation time on the date of the prediction target (date and time t of the prediction target) (target sample data) and the data at the evaluation time on each past date (each date belonging to the comparison period) (comparison sample data). The data extractor 18 stores the extracted data in the extracted data storage 19. The number of pieces of extracted data is counted, and if the number of pieces of data is less than a threshold (S106: No), the user is notified via the output device 301, and the user designates the data extraction conditions again (S104). The data extractor 18 extracts data again based on the designated data extraction conditions (S105). If the number of pieces of the extracted past data is equal to or larger than the threshold (S106: Yes), the processing proceeds to step S107.

The similarity calculator 20 acquires the metric conditions which designate a similarity metric, the area conditions which designate a target area, and the metric weight conditions which designate a weight of the similarity metric from the input device 201 (S107, S108, S109).

The similarity calculator 20 calculates a similarity between the target sample data at the evaluation time on the date of the prediction target (date and time t of the prediction target) and the comparison sample data at the evaluation time for each date belonging to the comparison period, based on these kinds of information (S110). Details of calculation of the similarity have been described above.

The predictor 21 selects top H (H is an integer of equal to or greater than 1) dates (similarity dates) having a higher similarity among respective dates belonging to the comparison period (Sill). The predictor 21 calculates the predicted value at the evaluation time on the date of the prediction target (date and time t of the prediction target) based on the similarities at the evaluation time on the selected H similarity dates and the actual values at the evaluation time on the selected similarity dates (actual values of the similarity sample data) (Sill). The predictor 21 may estimate statistical information (for example, probability distribution) for the predicted value.

The corrector 22 acquires the parameter of the model from the input device 201 (S112), and corrects the predicted value calculated by the predictor 21 based on the acquired parameter of the model (S113). The corrector 22 stores the corrected predicted value in the prediction result storage 23 (S114).

In the case where processing termination condition is not satisfied, the processing returns to step S107 (S115: No), similar processing is repeated. Meanwhile, in the case where the processing termination condition is satisfied (S115: Yes), processing of the present flowchart is finished. Examples of the case where the processing termination condition is not satisfied can include a case where an instruction to continue processing is input by the user. Examples of the case where the processing termination condition is satisfied can include a case where an instruction to finish the processing is input by the user.

According to the present approach, the predicted value is calculated by extracting a plurality of past actual values and mixing the extracted values (this method will be sometimes referred to as analog ensemble). According to this, it is possible to calculate the predicted value on the date and time t of the prediction target with high accuracy without creating a prediction model. Further, even if there is a small number of pieces of past data, it is possible to calculate the predicted value. Further, even in the case where a trend of the result of the prediction target is dramatically changed, it is possible to follow this in a short period of time (a couple of days). Further, because the predicted value is calculated based on the past actual value, there is an advantage that user's understanding of the prediction result can be easily obtained.

(Second Approach)

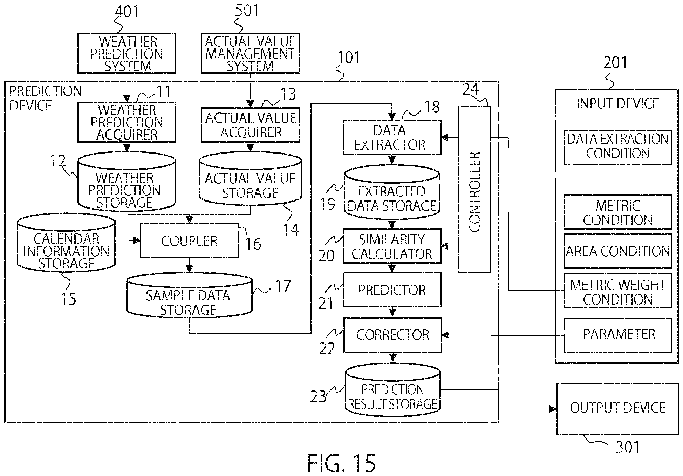

FIG. 15 illustrates an example of the prediction device 101 according to a second approach. A controller 24 is added. Because other components are similar to those in the configuration in FIG. 1, the same reference numerals are assigned to blocks having the same name, and description will be omitted.

The controller 24 changes values of various kinds of conditions (for example, changing values of the data extraction conditions, the metric conditions, the metric weight conditions, or the like), calculate the predicted value based on the changed conditions and repeats the processing of the changing and the calculating. For example, the controller 24 controls to execute all patterns of all values of at least one of the data extraction conditions, the metric conditions and the metric weight conditions. Alternatively, the controller 24 controls to execute all combination patterns of respective values of the data extraction conditions, the metric conditions and the metric weight conditions.

The actual value acquirer 13 acquires the actual value on the date and time of the prediction target from the actual value management system 501. The controller 24 specifies a predicted value for which a difference from the actual value is the smallest or smaller than a threshold among predicted values corresponding to the values of the above various kinds of conditions and determines values of the conditions when the specified predicted value is obtained. The determined values are optimal values of the various kinds of conditions. The various kinds of conditions are updated with the specified optimal values. The updated various kinds of conditions are used for the next date and time of the prediction target.

As an operation example of the present approach, in the case where all the patterns are judged as to whether or not the processing termination condition is satisfied in step S115 in FIG. 14 described above, it may be judged that the processing termination condition is satisfied, and, in other cases, it may be judged that the processing termination condition is not satisfied.

(Third Approach)

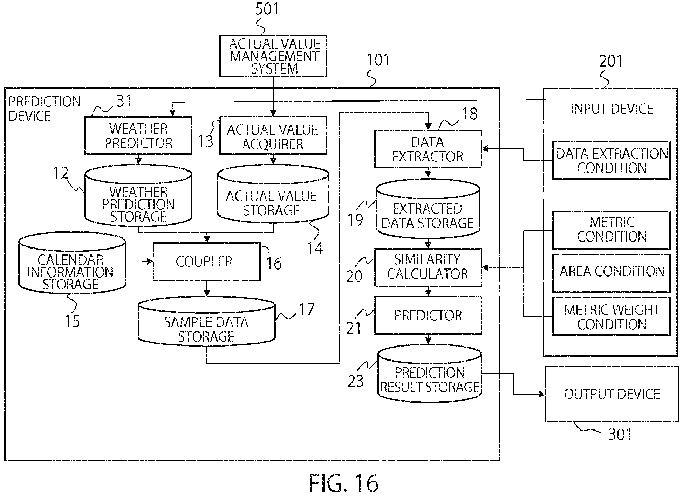

FIG. 16 illustrates an overall configuration example of a prediction system according to a third approach. FIG. 16 is different from FIG. 1 in that a weather predictor 31 is provided at the prediction device 101, and the weather prediction acquirer 11 and the weather prediction system 401 do not exist. Because other components are similar to those in the configuration in FIG. 1, the same reference numerals are assigned to blocks having the same name, and description will be omitted. It is also possible to provide the weather predictor 31 in the prediction device 101 in FIG. 13.

The weather predictor 31 predicts weather using a numerical prediction model. The numerical prediction model is, for example, a global ensemble prediction system, a global spectral model, a meso-scale model, a local forecast model, or the like. Further, it is also possible to use a coupled atmosphere-ocean global climate model such as a season ensemble prediction system. It is also possible to use different models in accordance with conditions or combine a plurality of models.

The numerical prediction models and initial values of the weather information (actual values of the past weather information) are stored in the weather prediction storage 12. The weather predictor 31 reads out the numerical prediction models and the initial values from the weather prediction storage 12 and predicts weather. The weather predictor 31 stores the weather predicted value obtained through prediction of the weather in the weather prediction storage 12. The weather predicted value stored in the weather prediction storage 12 is used at the coupler 16 in a similar manner to the first approach.

As an operation example of the weather predictor 31, the weather predictor 31 determines a type of the numerical prediction model to be used based on at least one of: a geographical area (target area) of the prediction target and locations within the area; and the date and time of the prediction target. The user may operate the input device 201 to input these geographical area, locations and the date and time of the prediction target.

The weather predictor 31 selects the numerical prediction model based on a size of the geographical area or an interval between locations as an example. For example, in the case where the geographical area is narrow or the intervals between locations is narrow, the numerical prediction model relating to a narrow grid interval (high resolution) is selected. For example, the local forecast model, the meso-scale model, or the like, is selected. Further, the weather predictor 31 selects the numerical prediction model based on a time length until the date and time of the prediction target as an example. For example, in the case where a date and time 5 days later is designated as the date and time, a model with a long prediction period such as the global spectral model is selected. The numerical prediction model may be selected based on both of the size of the geographical area or the interval between locations, and the date and time of the prediction target.

As the initial values of the numerical prediction model, the latest weather values are used. The latest weather values may be stored in the weather prediction storage 12 in advance or may be acquired by the weather predictor 31 from an external system. The weather predictor 31 performs calculation using the numerical prediction model based on the initial values.

The weather predictor 31 specifies coordinate in the numerical prediction model, corresponding to the location. For example, latitude and longitude of the position corresponding to the original location in the numerical prediction model are specified, and the latitude and longitude of the location are converted into coordinate in the numerical prediction model. Then, the weather predicted value (such as a temperature and a precipitation amount) relating to the coordinate corresponding to each location are acquired from a calculation result using the above-described numerical prediction model. By this means, the location is associated with the weather predicted value. The weather predictor 31 stores the weather predicted value at each location in the weather prediction storage 12.

The weather predictor 31 may store the weather prediction actual data indicating the weather predicted value at each location for the date and time of the prediction target in the prediction result storage 23. The output device 301 may read out the weather prediction actual data and display the data on a screen.

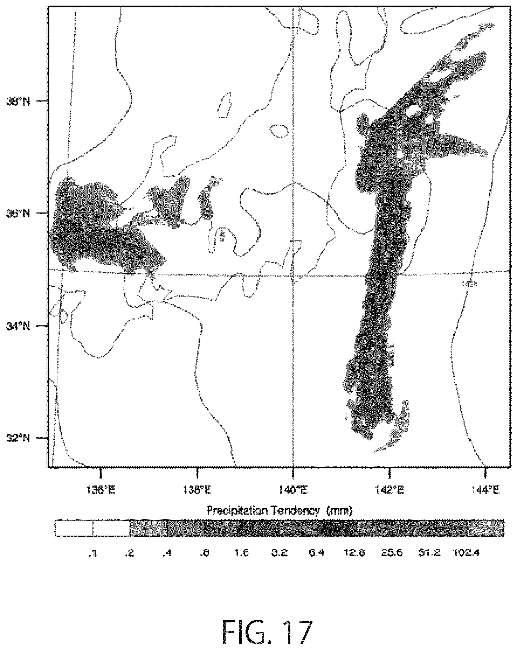

FIG. 17 illustrates an example of the weather prediction actual data. In this example, a result of prediction of the precipitation amount (Precipitation Tendency) for an area including the geographical area of the prediction target for a certain date and time of the prediction target is indicated.

In this manner, it is possible to predict weather on an arbitrary date and time or in an arbitrary area which is not covered by the weather prediction system by adding the weather predictor to the prediction device 101. By this means, it is possible to predict electric power market price on the date and time or in an arbitrary area.

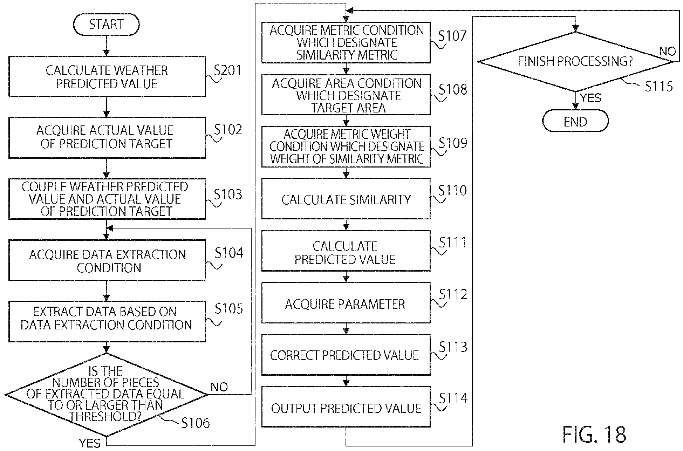

FIG. 18 is a flowchart illustrating an example of operation of the prediction device 101 in FIG. 16. In the present flowchart, step S101 in the flowchart in FIG. 14 is replaced with step S201. In step S201, the weather predictor 31 calculates the weather predicted value at each location within the area of the prediction target on the date and time of the prediction target using the numerical prediction model. The weather predictor 31 stores the calculated weather predicted value at each location in the weather prediction storage 12. Step after step S201 is the same as that in FIG. 14.

(Fourth Approach)

The actual value acquirer 13 acquires actual data including information indicating whether or not market is segmented in addition to the electric power market price from the actual value management system 501, and stores the acquired actual data in the actual value storage 14.

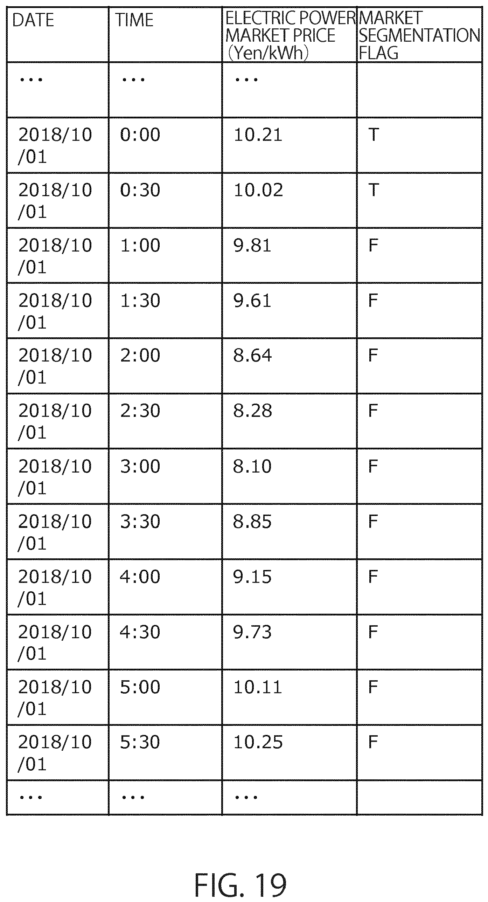

FIG. 19 illustrates an example of the actual data. The actual data is stored in a table form. A market segmentation flag is added. "T" indicates that the market segmentation occurred, and "F" indicates that the market segmentation did not occur.

The predictor 21 predicts whether or not the market segmentation occurs on the date and time of the prediction target. An example of a prediction expression will be indicated below.
[Math. 8]

$$B = \sum_i^H W_{score\_i} J_i \quad (9)$$

$J_i$ is a variable which becomes 1 in the case where the market segmentation flag is T and which becomes 0 in the case where the market segmentation flag is F, at the evaluation time on the date corresponding to H similarities selected in a similar manner to the first approach. $W_{score\_i}$ is similar to that in expression (7) in the first approach. That is, in expression (9), a weighted mean value of $J_i$ is calculated using $SCORE_i$. The predictor 21 predicts that the market is segmented if a value of B is equal to or greater than a threshold, and predicts that the market is not segmented if the value of B is less than the threshold. The threshold is a value greater than 0 and smaller than 1 as an example. The predictor 21 stores the predicted information indicating whether or not the market is segmented in the prediction result storage 23. The output device 301 reads out the information indicating whether or not the market is segmented from the prediction result storage 23 and displays the information on a screen. Alternatively, it is also possible to output the weighted mean value as is as a probability of occurrence of market segmentation. In this manner, according to the present approach, it is possible to predict whether or not the market is segmented or the probability of occurrence of the market segmentation on the date and time of the prediction target.

(Hardware configuration)

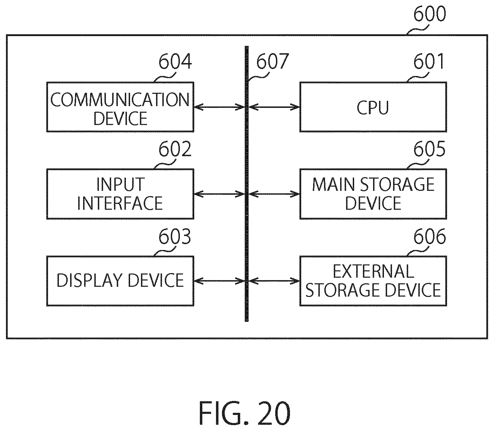

FIG. 20 illustrates a hardware configuration of the prediction device 101 in FIG. 1, FIG. 13, FIG. 15 or FIG. 16. The prediction device 101 in FIG. 1, FIG. 13. FIG. 15 or FIG. 16 is configured with a computer device 600. The computer device 600 includes a CPU 601, an input interface 602, a display device 603, a communication device 604, a main storage device 605 and an external storage device 606, which are connected to each other with a bus 607.

The CPU (central processing unit) 601 executes a prediction program which is a computer program on the main storage device 605. The prediction program is a program which realizes the above-described respective functional components of the prediction device 101. The prediction program does not have to be one program, and may be realized with combination of a plurality of programs or scripts. Each functional component is realized by the CPU 601 executing the prediction program.

The input interface 602 is a circuit for inputting an operation signal from an input device such as a keyboard, a mouse and a touch panel to the prediction device 101. The input interface 602 corresponds to the input device 201.

The display device 603 displays data output from the prediction device 101. While the display device 603 is, for example, an LCD (Liquid Crystal Display), an organic electroluminescence display, a CRT (Cathode Ray Tube) or a PDP (Plasma Display Panel), the display device 603 is not limited to these. The data output from the computer device 600 can be displayed at this display device 603. The display device 603 corresponds to the output device 301.

The communication device 604 is a circuit for the prediction device 101 to perform communication with an external device in a wireless or wired manner. Data can be input from the external device via the communication device 604. The data input from the external device can be stored in the main storage device 605 or the external storage device 606.

The main storage device 605 stores the prediction program, data necessary for execution of the prediction program, data generated by execution of the prediction program, or the like. The prediction program is expanded on the main storage device 605 and executed. While the main storage device 605 is, for example, a RAM, a DRAM and an SRAM, the main storage device 605 is not limited to these. Each storage or database in FIG. 1, FIG. 13, FIG. 15 or FIG. 16 may be constructed on the main storage device 605.

The external storage device 606 stores the prediction program, data necessary for execution of the prediction program, data generated by execution of the prediction program, or the like. These prediction program and data are read out to the main storage device 605 upon execution of the prediction program. While the external storage device 606 is, for example, a hard disk, an optical disk, a flash memory, and a magnetic tape, the external storage device 606 is not limited to these. Each storage or database in FIG. 1, FIG. 13, FIG. 15 or FIG. 16 may be constructed on the external storage device 606.

Note that the prediction program may be installed in the computer device 600 in advance or may be stored in a storage medium such as a CD-ROM. Further, the prediction program may be uploaded on the Internet.

Further, the prediction device 101 may be configured with a single computer device 600 or may be configured as a system including a plurality of computer devices 600 which are connected to each other.

While certain approaches have been described, these approaches have been presented by way of example only, and are not intended to limit the scope of the inventions. Indeed, the apparatuses described herein may be embodied in a variety of other forms; furthermore various omissions, substitutions and changes in the form of the apparatuses described herein may be made. The accompanying claims and their equivalents are intended to cover such forms or modifications as would fall within the scope of the inventions.

[Clauses]

Clause 1. A prediction device comprising:

a similarity calculator configured to calculate a plurality of similarities between first weather prediction data at first times and second weather prediction data at a second time,

wherein the first weather prediction data of the first times indicates weather prediction at the first times for locations in a geographical area, and
wherein the second weather prediction data indicates weather prediction at the second time for the locations; and

a predictor configured to calculate a predicted value at the second time based on the plurality of similarities and actual values at the first times in the geographical area.

Clause 2. The prediction device according to clause 1, wherein
the similarity calculator
calculates a plurality of differences between the second time and the plurality of first times and
calculates the plurality of similarities based on the plurality of differences.

Clause 3. The prediction device according to clause 1 or 2, wherein
the first weather prediction data includes a plurality of weather predicted values,
the second weather prediction data includes a plurality of weather predicted values, and
the similarity calculator
sums up differences between the plurality of weather predicted values of the second weather prediction data and the plurality of weather predicted values of the first weather prediction data by a plurality of first weights to acquire a weighted sum and
calculates the similarities based on the weighted sum.

Clause 4. The prediction device according to clause 3 as depending from clause 2, wherein
the second time and the plurality of first times are same time on different dates,
the similarity calculator calculates multiplies the differences between the second time and the first times by a second weight corresponding to the same time, and
the similarity calculator calculates the similarities based on multiplied values and the weighted sums.

Clause 5. The prediction device according to any one of clauses 1 to 4, further comprising:

a weather prediction storage in which the plurality of weather predicted values at the plurality of first times and the plurality of weather predicted values at the second time are stored,
wherein the similarity calculator specifies one or more weather predicted values of the first times among the plurality of weather predicted values at the first times based on a similarity metric condition being a condition of weather predicted values to be used,
wherein the similarity calculator specifies one or more weather predicted values of the second time among the plurality of weather predicted values at the second time, and
wherein the specified weather predicted values of the first times are used as the first weather prediction data of the first times, and
wherein the specified weather predicted values of the second time are used as the weather prediction data of the second time.

Clause 6. The prediction device according to any one of clauses 1 to 5, further comprising:

a data extractor configured to extract the first weather prediction data which satisfies a data extraction condition among the first weather prediction data of the first times,
wherein the similarity calculator uses the extracted first weather prediction data.

Clause 7. The prediction device according to clause 6, wherein
the data extraction condition is based on calendar information, and
the data extractor specifies extracts the first time which satisfies the data extraction condition from among the plurality of first times, and extract the first weather prediction data of the specified first time from the weather prediction data of the first times.

Clause 8. The prediction device according to clause 5, further comprising:

an actual value acquirer configured to acquire an actual value at the second time from an external system; and
a controller configured to:

repeat to calculate the predicted value at the second time by changing a value of the similarity metric condition;

and

specify a value of the similarity metric condition on which a difference between the predicted value and the actual value is equal to or less than a threshold or is the smallest;

wherein the similarity calculator updates the similarity metric condition with the specified value.

Clause 9. The prediction device according to clause 6, further comprising:

an actual value acquirer configured to acquire an actual value at the second time from an external system; and a controller configured to:

repeat to calculate the predicted value at the second time by changing a value of the data extraction condition; and specify a value of the data extraction condition on which the predicted value for which a difference between the predicted value and the actual value is equal to or less than a threshold or is the smallest, and wherein the similarity calculator updates the data extraction condition with the specified value.

Clause 10. The prediction device according to any one of clauses 1 to 9, wherein the predictor calculates the predicted value of the second time by weighting and averaging the actual values of the plurality of first times with the plurality of similarities.

Clause 11. The prediction device according to any one of clauses 1 to 10, wherein the predictor specifies top H similarities among the plurality of similarities and the predictor calculates the predicted value of the second time using the H similarities and the actual values of the first times for which the H similarities are specified, and the H is an integer of equal to or greater than 2.

Clause 12. The prediction device according to any one of clauses 1 to 11, further comprising: a corrector configured to correct the predicted value of the second time based on a correction model for a predicted value.

Clause 13. The prediction device according to any one of clauses 1 to 12, wherein the predictor generates statistical information of the predicted values based on the predicted values of the plurality of first times and the similarities at the plurality of first times.

Clause 14. The prediction device according to clause 13, wherein the predictor generates a graph indicating temporal transition of the statistical information and a graph indicating temporal transition of the predicted value at the second time.

Clause 15. The prediction device according to any one of clauses 1 to 14, further comprising: an output device configured to display the predicted value.

Clause 16. The prediction device according to any one of clauses 1 to 15, wherein the actual value is an actual value of electric power market price, and the predicted value is a predicted value of the electric power market price.

Clause 17. The prediction device according to clause 16, wherein the predictor predicts whether a market segmentation occurs at the second time based on the plurality of similarities and information indicating whether the market segmentation occurred at the plurality of first times.

Clause 18. A prediction method performed by a computer comprising:

calculating a plurality of similarities between first weather prediction data at first times and second weather prediction data at a second time,

wherein the first weather prediction data of the first times indicates weather prediction at the first times for locations in a geographical area, and wherein the second weather prediction data indicates weather prediction at the second time for the locations; and

calculating a predicted value at the second time based on the plurality of similarities and actual values at the first times in the geographical area.

Clause 19. A computer program which causes a computer to perform processes comprising:

calculating a plurality of similarities between first weather prediction data at first times and second weather prediction data at a second time,

wherein the first weather prediction data of the first times indicates weather prediction at the first times for locations in a geographical area, and

wherein the second weather prediction data indicates weather prediction at the second time for the locations; and

calculating a predicted value at the second time based on the plurality of similarities and actual values at the first times in the geographical area.

Clause 20. A prediction device for calculating a predicted value in a geographical area, wherein the prediction device calculates the predicted value based on weather conditions at locations in a geographical area and an actual value in the geographical area.

**Claims**

1.  A prediction device comprising:

    a similarity calculator (20) configured to calculate a plurality of similarities between first weather prediction data at first times and second weather prediction data at a second time,

    wherein the first weather prediction data of the first times indicates weather prediction at the first times for locations in a geographical area, and
    wherein the second weather prediction data indicates weather prediction at the second time for the locations; and

    a predictor (21) configured to calculate a predicted value at the second time based on the plurality of similarities and actual values at the first times in the geographical area.

2.  The prediction device according to claim 1, wherein
    the similarity calculator (20)
    calculates a plurality of differences between the second time and the plurality of first times and
    calculates the plurality of similarities based on the plurality of differences.

3.  The prediction device according to claim 1 or 2, wherein
    the first weather prediction data includes a plurality of weather predicted values,
    the second weather prediction data includes a plurality of weather predicted values, and
    the similarity calculator (20)
    sums up differences between the plurality of weather predicted values of the second weather prediction data and the plurality of weather predicted values of the first weather prediction data by a plurality of first weights to acquire a weighted sum and
    calculates the similarities based on the weighted sum.

4.  The prediction device according to claim 3 as depending from claim 2, wherein
    the second time and the plurality of first times are same time on different dates,
    the similarity calculator (20) calculates multiplies the differences between the second time and the first times by a second weight corresponding to the same time, and
    the similarity calculator (20) calculates the similarities based on multiplied values and the weighted sums.

5.  The prediction device according to any one of claims 1 to 4, further comprising:

    a weather prediction storage (12) in which the plurality of weather predicted values at the plurality of first times and the plurality of weather predicted values at the second time are stored,
    wherein the similarity calculator (20) specifies one or more weather predicted values of the first times among the plurality of weather predicted values at the first times based on a similarity metric condition being a condition of weather predicted values to be used,
    wherein the similarity calculator (20) specifies one or more weather predicted values of the second time among the plurality of weather predicted values at the second time, and
    wherein the specified weather predicted values of the first times are used as the first weather prediction data of the first times, and
    wherein the specified weather predicted values of the second time are used as the weather prediction data of the second time.

6. The prediction device according to any one of claims 1 to 5, further comprising:

   a data extractor (18) configured to extract the first weather prediction data which satisfies a data extraction condition among the first weather prediction data of the first times,
   wherein the similarity calculator (20) uses the extracted first weather prediction data.

7. The prediction device according to claim 6, wherein
   the data extraction condition is based on calendar information, and
   the data extractor (18) specifies extracts the first time which satisfies the data extraction condition from among the plurality of first times, and extract the first weather prediction data of the specified first time from the weather prediction data of the first times.

8. The prediction device according to claim 5, further comprising:

   an actual value acquirer (13) configured to acquire an actual value at the second time from an external system; and
   a controller (24) configured to:

   repeat to calculate the predicted value at the second time by changing a value of the similarity metric condition; and
   specify a value of the similarity metric condition on which a difference between the predicted value and the actual value is equal to or less than a threshold or is the smallest;
   wherein the similarity calculator updates the similarity metric condition with the specified value.

9. The prediction device according to claim 6, further comprising:

   an actual value acquirer (13) configured to acquire an actual value at the second time from an external system; and
   a controller (24) configured to:

   repeat to calculate the predicted value at the second time by changing a value of the data extraction condition; and
   specify a value of the data extraction condition on which the predicted value for which a difference between the predicted value and the actual value is equal to or less than a threshold or is the smallest, and
   wherein the similarity calculator (20) updates the data extraction condition with the specified value.

10. The prediction device according to any one of claims 1 to 9, wherein
    the predictor (21) calculates the predicted value of the second time by weighting and averaging the actual values of the plurality of first times with the plurality of similarities.

11. The prediction device according to any one of claims 1 to 10, wherein
    the predictor (21) specifies top H similarities among the plurality of similarities and
    the predictor (21) calculates the predicted value of the second time using the H similarities and the actual values of the first times for which the H similarities are specified, and
    the H is an integer of equal to or greater than 2.

12. The prediction device according to any one of claims 1 to 11, further comprising:
    a corrector (22) configured to correct the predicted value of the second time based on a correction model for a predicted value.

13. The prediction device according to any one of claims 1 to 12, wherein
    the predictor (21) generates statistical information of the predicted values based on the predicted values of the plurality of first times and the similarities at the plurality of first times.

14. The prediction device according to claim 13, wherein
    the predictor (21) generates a graph indicating temporal transition of the statistical information and a graph indicating temporal transition of the predicted value at the second time.

15. The prediction device according to any one of claims 1 to 14, further comprising:
an output device (301) configured to display the predicted value.

16. The prediction device according to any one of claims 1 to 15, wherein
the actual value is an actual value of electric power market price, and
the predicted value is a predicted value of the electric power market price.

17. The prediction device according to claim 16, wherein
the predictor (21) predicts whether a market segmentation occurs at the second time based on the plurality of similarities and information indicating whether the market segmentation occurred at the plurality of first times.

18. A prediction method performed by a computer comprising:

calculating a plurality of similarities between first weather prediction data at first times and second weather prediction data at a second time,

wherein the first weather prediction data of the first times indicates weather prediction at the first times for locations in a geographical area, and
wherein the second weather prediction data indicates weather prediction at the second time for the locations; and

calculating a predicted value at the second time based on the plurality of similarities and actual values at the first times in the geographical area.

19. A computer program which causes a computer to perform processes comprising:

calculating a plurality of similarities between first weather prediction data at first times and second weather prediction data at a second time,

wherein the first weather prediction data of the first times indicates weather prediction at the first times for locations in a geographical area, and
wherein the second weather prediction data indicates weather prediction at the second time for the locations; and

calculating a predicted value at the second time based on the plurality of similarities and actual values at the first times in the geographical area.

20. A prediction device for calculating a predicted value in a geographical area, wherein
the prediction device (101) calculates the predicted value based on weather conditions at locations in a geographical area and an actual value in the geographical area.

401

WEATHER
PREDICTION
SYSTEM

501

ACTUAL VALUE
MANAGEMENT
SYSTEM

101

201

INPUT DEVICE

PREDICTION DEVICE

11

WEATHER
PREDICTION
ACQUIRER

13

ACTUAL VALUE
ACQUIRER

18

DATA
EXTRACTOR

DATA EXTRACTION
CONDITION

12

WEATHER
PREDICTION
STORAGE

ACTUAL VALUE
STORAGE

14

19

EXTRACTED
DATA STORAGE

METRIC
CONDITION

CALENDAR
INFORMATION
STORAGE

COUPLER

16

20

SIMILARITY
CALCULATOR

AREA CONDITION

METRIC WEIGHT
CONDITION

15

SAMPLE DATA
STORAGE

17

21

PREDICTOR

23

PREDICTION
RESULT STORAGE

OUTPUT DEVICE

301

FIG. 1

FIG. 2

FIG. 3

| LOCATION ID | DATE | TIME | TEMPERATURE [°C] | SOLAR RADIATION INTENSITY [MJ/m$^2$] | WIND SPEED [m/s] | PRECIPITATION AMOUNT [mm] |
|---|---|---|---|---|---|---|
| ... | ... | ... | ... | ... | ... | ... |
| 001 | 2018/10/01 | 0:00 | 11.2 | 0.0 | 3.4 | 0.0 |
| 001 | 2018/10/01 | 0:30 | 10.9 | 0.0 | 3.5 | 0.5 |
| 001 | 2018/10/01 | 1:00 | 10.3 | 0.0 | 2.9 | 1.5 |
| 001 | 2018/10/01 | 1:30 | 10.1 | 0.0 | 3.9 | 2.0 |
| 001 | 2018/10/01 | 2:00 | 10.0 | 0.0 | 3.9 | 1.2 |
| 001 | 2018/10/01 | 2:30 | 10.0 | 0.0 | 4.9 | 1.0 |
| 001 | 2018/10/01 | 3:00 | 9.9 | 0.0 | 4.1 | 2.5 |
| 001 | 2018/10/01 | 3:30 | 10.3 | 0.0 | 4.8 | 1.5 |
| 001 | 2018/10/01 | 4:00 | 10.5 | 0.0 | 5.4 | 3.5 |
| 001 | 2018/10/01 | 4:30 | 11.1 | 0.0 | 5.8 | 2.0 |
| 001 | 2018/10/01 | 5:00 | 11.5 | 0.0 | 4.6 | 2.0 |
| 001 | 2018/10/01 | 5:30 | 11.7 | 0.0 | 6.0 | 1.0 |
| ... | ... | ... | ... | ... | ... | ... |

FIG. 4

| DATE | TIME | ELECTRIC POWER MARKET PRICE [Yen/kWh] |
|---|---|---|
| . . . | . . . | . . . |
| 2018/10/01 | 0:00 | 10.21 |
| 2018/10/01 | 0:30 | 10.02 |
| 2018/10/01 | 1:00 | 9.81 |
| 2018/10/01 | 1:30 | 9.61 |
| 2018/10/01 | 2:00 | 8.64 |
| 2018/10/01 | 2:30 | 8.28 |
| 2018/10/01 | 3:00 | 8.10 |
| 2018/10/01 | 3:30 | 8.85 |
| 2018/10/01 | 4:00 | 9.15 |
| 2018/10/01 | 4:30 | 9.73 |
| 2018/10/01 | 5:00 | 10.11 |
| 2018/10/01 | 5:30 | 10.25 |
| . . . | . . . | . . . |

FIG. 5

| CALENDAR (HOLIDAY) | EVENT |
|---|---|
| 2018/1/1 | NEW YEAR'S DAY |
| 2018/1/8 | COMING-OF-AGE DAY |
| 2018/2/11 | NATIONAL FOUNDATION DAY |
| 2018/2/12 | SUBSTITUTE HOLIDAY |
| 2018/3/21 | VERNAL EQUINOX DAY |
| 2018/4/29 | SHOWA DAY |
| 2018/4/30 | SUBSTITUTE HOLIDAY |
| 2018/5/3 | CONSTITUTION MEMORIAL DAY |
| 2018/5/4 | GREENERY DAY |
| 2018/5/5 | CHILDREN'S DAY |
| 2018/7/16 | MARINE DAY |
| 2018/8/11 | MOUNTAIN DAY |
| 2018/9/17 | RESPECT FOR THE AGED DAY |
| 2018/9/23 | AUTUMNAL EQUINOX DAY |
| 2018/9/24 | SUBSTITUTE HOLIDAY |
| 2018/10/8 | HEALTH-SPORTS DAY |
| 2018/11/3 | CULTURE DAY |
| 2018/11/23 | LABOR THANKSGIVING DAY |
| 2018/12/23 | EMPEROR'S BIRTHDAY |
| 2018/12/24 | SUBSTITUTE HOLIDAY |
| 2019/1/1 | NEW YEAR'S DAY |
| 2019/1/14 | COMING-OF-AGE DAY |
| 2019/2/11 | NATIONAL FOUNDATION DAY |
| 2019/3/21 | VERNAL EQUINOX DAY |
| 2019/4/29 | SHOWA DAY |
| 2019/5/3 | CONSTITUTION MEMORIAL DAY |
| 2019/5/4 | GREENERY DAY |
| 2019/5/5 | CHILDREN'S DAY |
| 2019/5/6 | SUBSTITUTE HOLIDAY |
| 2019/7/15 | MARINE DAY |
| 2019/8/11 | MOUNTAIN DAY |
| 2019/8/12 | SUBSTITUTE HOLIDAY |
| 2019/9/16 | RESPECT FOR THE AGED DAY |
| 2019/9/23 | AUTUMNAL EQUINOX DAY |
| 2019/10/14 | HEALTH-SPORTS DAY |
| 2019/11/3 | CULTURE DAY |
| 2019/11/4 | SUBSTITUTE HOLIDAY |
| 2019/11/23 | LABOR THANKSGIVING DAY |
| 2019/12/23 | EMPEROR'S BIRTHDAY |

FIG. 6

| DATE | TIME | ELECTRIC POWER MARKET PRICE [Yen/kWh] | LOCATION ID | TEMPERATURE [°C] | SOLAR RADIATION INTENSITY[MJ/m²] | ··· | LOCATION ID | TEMPERATURE [°C] | SOLAR RADIATION INTENSITY[MJ/m²] | ··· | CALENDAR INFORMATION |
|---|---|---|---|---|---|---|---|---|---|---|---|
| ··· | ··· | ··· | ··· | ··· | ··· | ··· | ··· | ··· | ··· | ··· | ··· |
| 2018/10/01 | 0:00 | 10.21 | 001 | 11.2 | 0.0 | ··· | 007 | 11.0 | 0.0 | ··· | WEEKDAY, MONDAY |
| 2018/10/01 | 0:30 | 10.02 | 001 | 10.9 | 0.0 | ··· | 007 | 10.1 | 0.0 | ··· | WEEKDAY, MONDAY |
| 2018/10/01 | 1:00 | 9.81 | 001 | 10.3 | 0.0 | ··· | 007 | 10.5 | 0.0 | ··· | WEEKDAY, MONDAY |
| 2018/10/01 | 1:30 | 9.61 | 001 | 10.1 | 0.0 | ··· | 007 | 10.5 | 0.0 | ··· | WEEKDAY, MONDAY |
| 2018/10/01 | 2:00 | 8.64 | 001 | 10.0 | 0.0 | ··· | 007 | 10.1 | 0.0 | ··· | WEEKDAY, MONDAY |
| 2018/10/01 | 2:30 | 8.28 | 001 | 10.0 | 0.0 | ··· | 007 | 10.1 | 0.0 | ··· | WEEKDAY, MONDAY |
| 2018/10/01 | 3:00 | 8.10 | 001 | 9.9 | 0.0 | ··· | 007 | 9.5 | 0.0 | ··· | WEEKDAY, MONDAY |
| 2018/10/01 | 3:30 | 8.85 | 001 | 10.3 | 0.0 | ··· | 007 | 10.8 | 0.0 | ··· | WEEKDAY, MONDAY |
| 2018/10/01 | 4:00 | 9.15 | 001 | 10.5 | 0.0 | ··· | 007 | 10.5 | 0.0 | ··· | WEEKDAY, MONDAY |
| 2018/10/01 | 4:30 | 9.73 | 001 | 11.1 | 0.0 | ··· | 007 | 11.6 | 0.0 | ··· | WEEKDAY, MONDAY |
| 2018/10/01 | 5:00 | 10.11 | 001 | 11.5 | 0.0 | ··· | 007 | 11.7 | 0.0 | ··· | WEEKDAY, MONDAY |
| 2018/10/01 | 5:30 | 10.25 | 001 | 11.7 | 0.0 | ··· | 007 | 11.9 | 0.0 | ··· | WEEKDAY, MONDAY |
| ··· | ··· | ··· | ··· | ··· | ··· | ··· | ··· | ··· | ··· | ··· | ··· |
| 2018/12/03 | 5:30 | – | 001 | 10.7 | 0.0 | ··· | 007 | 10.9 | 0.0 | ··· | WEEKDAY, MONDAY |
| ··· | ··· | ··· | ··· | ··· | ··· | ··· | ··· | ··· | ··· | ··· | ··· |

FIG. 7

| TIME | METEOROLOGICAL AMOUNT (PREDICTED VALUE) | | | | PERIOD |
|---|---|---|---|---|---|
| | TEMPERATURE | SOLAR RADIATION INTENSITY | WIND SPEED | PRECIPITATION AMOUNT | TIME DIFFERENCE |
| 0:00 | 1 | 1 | 1 | 1 | 1 |
| 0:30 | 1 | 1 | 1 | 1 | 1 |
| 1:00 | 1 | 1 | 1 | 1 | 1 |
| 1:30 | 1 | 1 | 1 | 1 | 1 |
| 2:00 | 1 | 1 | 1 | 1 | 1 |
| 2:30 | 1 | 1 | 1 | 1 | 1 |
| 3:00 | 1 | 1 | 1 | 1 | 1 |
| 3:30 | 1 | 1 | 1 | 1 | 1 |
| 4:00 | 1 | 1 | 1 | 1 | 1 |
| 4:30 | 1 | 1 | 1 | 1 | 1 |
| 5:00 | 1 | 1 | 1 | 1 | 1 |
| 5:30 | 1 | 1 | 1 | 1 | 1 |
| 6:00 | 1 | 1 | 1 | 1 | 1 |
| 6:30 | 1 | 1 | 1 | 1 | 1 |
| 7:00 | 1 | 1 | 1 | 1 | 1 |
| 7:30 | 1 | 1 | 1 | 1 | 1 |
| 8:00 | 1 | 1 | 1 | 1 | 1 |
| 8:30 | 1 | 1 | 1 | 1 | 1 |
| 9:00 | 1 | 1 | 1 | 1 | 1 |
| 9:30 | 1 | 1 | 1 | 1 | 1 |
| 10:00 | 1 | 1 | 1 | 1 | 1 |
| 10:30 | 1 | 1 | 1 | 1 | 1 |
| 11:00 | 1 | 1 | 1 | 1 | 1 |
| 11:30 | 1 | 1 | 1 | 1 | 1 |
| 12:00 | 1 | 1 | 1 | 1 | 1 |
| 12:30 | 1 | 1 | 1 | 1 | 1 |
| 13:00 | 1 | 1 | 1 | 1 | 1 |
| 13:30 | 1 | 1 | 1 | 1 | 1 |
| ... | ... | ... | ... | ... | ... |

1: SELECTION
0: NON-SELECTION

FIG. 8

| TIME | METEOROLOGICAL CONDITION (WEIGHT) | | | | PERIOD |
|---|---|---|---|---|---|
| | TEMPERATURE | SOLAR RADIATION INTENSITY | WIND SPEED | PRECIPITATION AMOUNT | TIME DIFFERENCE |
| 0:00 | 0.03 | 0.22 | 0.65 | 0.01 | 0.08 |
| 0:30 | 0.28 | 0.24 | 0.22 | 0.01 | 0.26 |
| 1:00 | 0.22 | 0.29 | 0.06 | 0.12 | 0.31 |
| 1:30 | 0.28 | 0.06 | 0.15 | 0.26 | 0.25 |
| 2:00 | 0.27 | 0.15 | 0.11 | 0.20 | 0.28 |
| 2:30 | 0.25 | 0.12 | 0.27 | 0.32 | 0.04 |
| 3:00 | 0.26 | 0.19 | 0.00 | 0.33 | 0.22 |
| 3:30 | 0.30 | 0.24 | 0.01 | 0.19 | 0.26 |
| 4:00 | 0.47 | 0.02 | 0.04 | 0.18 | 0.28 |
| 4:30 | 0.32 | 0.11 | 0.13 | 0.33 | 0.11 |
| 5:00 | 0.37 | 0.12 | 0.39 | 0.09 | 0.03 |
| 5:30 | 0.13 | 0.13 | 0.28 | 0.17 | 0.29 |
| 6:00 | 0.28 | 0.15 | 0.20 | 0.16 | 0.21 |
| 6:30 | 0.09 | 0.35 | 0.19 | 0.10 | 0.28 |
| 7:00 | 0.32 | 0.05 | 0.29 | 0.33 | 0.01 |
| 7:30 | 0.13 | 0.00 | 0.42 | 0.14 | 0.31 |
| 8:00 | 0.35 | 0.34 | 0.00 | 0.17 | 0.14 |
| 8:30 | 0.21 | 0.08 | 0.22 | 0.44 | 0.05 |
| 9:00 | 0.03 | 0.27 | 0.24 | 0.06 | 0.39 |
| 9:30 | 0.37 | 0.21 | 0.26 | 0.14 | 0.02 |
| 10:00 | 0.34 | 0.23 | 0.24 | 0.13 | 0.07 |
| 10:30 | 0.29 | 0.20 | 0.18 | 0.33 | 0.00 |
| 11:00 | 0.07 | 0.37 | 0.13 | 0.34 | 0.09 |
| 11:30 | 0.18 | 0.10 | 0.31 | 0.26 | 0.15 |
| 12:00 | 0.24 | 0.14 | 0.44 | 0.14 | 0.03 |
| 12:30 | 0.04 | 0.11 | 0.23 | 0.30 | 0.32 |
| 13:00 | 0.25 | 0.19 | 0.19 | 0.20 | 0.17 |
| 13:30 | 0.24 | 0.20 | 0.17 | 0.20 | 0.20 |
| ... | ... | ... | ... | ... | ... |

FIG. 9

| DATE OF PREDICTION TARGET | TIME | PREDICTED ELECTRIC POWER MARKET PRICE [Yen/kWh] |
|---|---|---|
| 2018/12/03 | 0:00 | 11.21 |
| 2018/12/03 | 0:30 | 12.02 |
| 2018/12/03 | 1:00 | 10.81 |
| 2018/12/03 | 1:30 | 9.99 |
| 2018/12/03 | 2:00 | 9.54 |
| 2018/12/03 | 2:30 | 8.88 |
| 2018/12/03 | 3:00 | 8.55 |
| 2018/12/03 | 3:30 | 9.15 |
| 2018/12/03 | 4:00 | 9.45 |
| 2018/12/03 | 4:30 | 9.99 |
| 2018/12/03 | 5:00 | 10.71 |
| 2018/12/03 | 5:30 | 10.95 |
| . . . | . . . | . . . |

FIG. 10

FIG. 11

: 0.00 QUANTILE POINT OF PROBABILITY DISTRIBUTION (51)

: 0.25 QUANTILE POINT OF PROBABILITY DISTRIBUTION (52)

: PREDICTED VALUE (53)

: 0.75 QUANTILE POINT OF PROBABILITY DISTRIBUTION (54)

: 1.00 QUANTILE POINT OF PROBABILITY DISTRIBUTION (55)

FIG. 12

FIG. 13

START

ACQUIRE WEATHER
PREDICTED VALUE — S101

ACQUIRE ACTUAL VALUE
OF PREDICTION TARGET — S102

COUPLE WEATHER PREDICTED
VALUE AND ACTUAL VALUE
OF PREDICTION TARGET — S103

ACQUIRE DATA EXTRACTION
CONDITION — S104

EXTRACT DATA BASED ON
DATA EXTRACTION CONDITION — S105

IS THE
NUMBER OF PIECES
OF EXTRACTED DATA EQUAL
TO OR LARGER THAN
THRESHOLD? — S106

NO

YES

ACQUIRE METRIC CONDITION
WHICH DESIGNATE
SIMILARITY METRIC — S107

ACQUIRE AREA CONDITION
WHICH DESIGNATE
TARGET AREA — S108

ACQUIRE METRIC WEIGHT
CONDITION WHICH DESIGNATE
WEIGHT OF SIMILARITY METRIC — S109

CALCULATE SIMILARITY — S110

CALCULATE
PREDICTED VALUE — S111

ACQUIRE PARAMETER — S112

CORRECT PREDICTED VALUE — S113

OUTPUT PREDICTED VALUE — S114

FINISH PROCESSING? — S115

NO

YES

END

FIG. 14

FIG. 15

FIG. 16

Precipitation Tendency (mm)

.1    .2    .4    .8    1.6    3.2    6.4    12.8    25.6    51.2    102.4

FIG. 17

START

CALCULATE WEATHER
PREDICTED VALUE — S201

ACQUIRE ACTUAL VALUE
OF PREDICTION TARGET — S102

COUPLE WEATHER PREDICTED
VALUE AND ACTUAL VALUE
OF PREDICTION TARGET — S103

ACQUIRE DATA EXTRACTION
CONDITION — S104

EXTRACT DATA BASED ON
DATA EXTRACTION CONDITION — S105

IS THE
NUMBER OF PIECES
OF EXTRACTED DATA EQUAL
TO OR LARGER THAN
THRESHOLD? — S106

NO

YES

ACQUIRE METRIC CONDITION
WHICH DESIGNATE
SIMILARITY METRIC — S107

ACQUIRE AREA CONDITION
WHICH DESIGNATE
TARGET AREA — S108

ACQUIRE METRIC WEIGHT
CONDITION WHICH DESIGNATE
WEIGHT OF SIMILARITY METRIC — S109

CALCULATE SIMILARITY — S110

CALCULATE
PREDICTED VALUE — S111

ACQUIRE PARAMETER — S112

CORRECT PREDICTED VALUE — S113

OUTPUT PREDICTED VALUE — S114

FINISH PROCESSING? — S115

NO

YES

END

FIG. 18

| DATE | TIME | ELECTRIC POWER MARKET PRICE (Yen/kWh) | MARKET SEGMENTATION FLAG |
|---|---|---|---|
| ... | ... | ... | |
| 2018/10/01 | 0:00 | 10.21 | T |
| 2018/10/01 | 0:30 | 10.02 | T |
| 2018/10/01 | 1:00 | 9.81 | F |
| 2018/10/01 | 1:30 | 9.61 | F |
| 2018/10/01 | 2:00 | 8.64 | F |
| 2018/10/01 | 2:30 | 8.28 | F |
| 2018/10/01 | 3:00 | 8.10 | F |
| 2018/10/01 | 3:30 | 8.85 | F |
| 2018/10/01 | 4:00 | 9.15 | F |
| 2018/10/01 | 4:30 | 9.73 | F |
| 2018/10/01 | 5:00 | 10.11 | F |
| 2018/10/01 | 5:30 | 10.25 | F |
| ... | ... | ... | |

FIG. 19

FIG. 20

Europäisches
Patentamt

European
Patent Office

Office européen
des brevets

# EUROPEAN SEARCH REPORT

Application Number

EP 19 19 4669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2013 066318 A (HITACHI LTD) 11 April 2013 (2013-04-11) * abstract * * paragraph [0001] - paragraph [0003] * * paragraph [0006] - paragraph [0011] * * paragraph [0013] - paragraph [0070] * * claims 1-7 * | 1-20 | INV. G06Q30/06 G06Q50/06 G06Q10/04 |
| X | US 2018/196896 A1 (ARAI TAKASHI [JP] ET AL) 12 July 2018 (2018-07-12) * abstract * * paragraph [0002] - paragraph [0007] * * paragraph [0010] - paragraph [0020] * * paragraph [0037] - paragraph [0103] * * claims 1-16; figures 1-16 * | 1-20 | |
| X | JP 2014 217092 A (SHIMIZU CONSTRUCTION CO LTD) 17 November 2014 (2014-11-17) * abstract * * paragraph [0001] - paragraph [0016] * * paragraph [0018] - paragraph [0056]; claims 1-6 * | 1-20 | |

TECHNICAL FIELDS SEARCHED (IPC)

G06Q

The present search report has been drawn up for all claims

| Place of search | Date of completion of the search | Examiner |
|---|---|---|
| The Hague | 8 October 2019 | Bassanini, Anna |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

............................................................................

& : member of the same patent family, corresponding
　　document

EPO FORM 1503 03.82 (P04C01)

**ANNEX TO THE EUROPEAN SEARCH REPORT
ON EUROPEAN PATENT APPLICATION NO.**

EP 19 19 4669

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2019

| Patent document cited in search report | | Publication date | Patent family member(s) | | Publication date |
|---|---|---|---|---|---|
| JP 2013066318 | A | 11-04-2013 | CN | 103020725 A | 03-04-2013 |
| | | | JP | 5492848 B2 | 14-05-2014 |
| | | | JP | 2013066318 A | 11-04-2013 |
| | | | US | 2014222228 A1 | 07-08-2014 |
| | | | WO | 2013042493 A1 | 28-03-2013 |
| US 2018196896 | A1 | 12-07-2018 | CN | 107912067 A | 13-04-2018 |
| | | | EP | 3333999 A1 | 13-06-2018 |
| | | | JP | WO2017026010 A1 | 18-01-2018 |
| | | | US | 2018196896 A1 | 12-07-2018 |
| | | | WO | 2017026010 A1 | 16-02-2017 |
| JP 2014217092 | A | 17-11-2014 | NONE | | |

EPO FORM P0459

For more details about this annex : see Official Journal of the European Patent Office, No. 12/82